# EUROPÄISCHE PATENTSCHRIFT

(11) **EP 3 511 152 B1**
(45) Veröffentlichungstag und Bekanntmachung des Hinweises auf die Patenterteilung: **03.03.2021**
(21) Anmeldenummer: 19151077.5
(22) Anmeldetag: 10.01.2019
(51) Int. Cl.: B29C 65/08, B29C 65/82, B42C 7/00, B42C 9/00, B42D 1/06, B42D 25/305, B29L 17/00, B29L 31/00

(54) **QUALITÄTSPRÜFUNG EINER ULTRASCHALLSCHWEISSVERBINDUNG**
QUALITY TESTING OF AN ULTRASONIC WELDED CONNECTION
ESSAI DE QUALITÉ D'UN ASSEMBLAGE SOUDÉ PAR ULTRASONS

(30) Priorität: 10.01.2018 DE 102018200250
(43) Veröffentlichungstag der Anmeldung: 17.07.2019
(73) Patentinhaber: Bundesdruckerei GmbH, 10969 Berlin (DE)
(72) Erfinder: GRIESER, Ralf, 10589 Berlin (DE); SCHULTHEIß, Christoph, 85622 Feldkirchen (DE); LELEK, Jakob, 10439 Berlin (DE)
(74) Vertreter: Richardt Patentanwälte PartG mbB

(56) Entgegenhaltungen:
- JP-A- 2006 142 705
- US-A- 4 457 051

## Beschreibung

Die Erfindung betrifft ein Verfahren zur Qualitätsprüfung einer Ultraschallschweißverbindung zwischen einer Gewebelasche und einem Produkt, eine Vorrichtung zur Qualitätsprüfung einer Ultraschallschweißverbindung, ein Ultraschallschweißsystem zum Herstellen und zur Qualitätsprüfung einer Ultraschallschweißverbindung zwischen einer Gewebelasche und einem Produkt, ein Verfahren zur Herstellung einer Ultraschallschweißverbindung sowie ein Dokument mit einer Ultraschallschweißverbindung zwischen einer Gewebelasche und einem Dokumentenkörper.

Ultraschallschweißen ist ein Verfahren zum schonenden Zusammenfügen eines Teils mit einem thermoplastischen Element. Dabei wird das thermoplastische Material für kurze Zeit zum Schmelzen gebracht, indem eine Ultraschallwelle mittels einer Sonotrode in das thermoplastische Element eingebracht wird. Auf diese Weise lässt sich beispielsweise eine Gewebelasche in eine Polycarbonatkarte einschmelzen, um eine dauerhafte Verbindung zwischen der Karte und dem Gewebeteil herzustellen. Das geschmolzene Polycarbonat fließt in die von den Gewebefäden gebildeten Laschen, sodass nach dem Erstarren des Kunststoffs eine formschlüssige Verbindung zwischen den beiden Teilen entsteht. Dieses Verfahren findet insbesondere bei der Herstellung von Wert- und Personaldokumenten wie beispielsweise Reisepässen Anwendung.

Sonotroden sind Verschleißteile, bei denen zum Ende ihrer Lebensdauer die erwünschte Schallleitfähigkeit im Ultraschallbereich allmählich nachlässt. Dieser Verschleiß ist der Sonotrode ohne aufwendiges Ausbauen und Vermessen nicht anzusehen und macht sich nur indirekt durch eine verminderte Festigkeit der Ultraschallschweißverbindung bemerkbar. Jedoch ist auch zur Überprüfung der Festigkeit von Ultraschallschweißverbindungen kein einfaches, zerstörungsfreies Verfahren bekannt.

Die US 4 457 051 A offenbart einen Schieber zur Befestigung an einem Textilband mittels Ultraschallschweißen. Ein Abschnitt auf einer Oberfläche des Schiebers ist mit Vorsprüngen zum Ultraschallschweißen an ein Band versehen. Der Abstand zwischen zwei benachbarten Vorsprüngen ist groß gegenüber dem Abstand zweier benachbarter Fäden des Textilbands.

Die JP 2006 142 705 A offenbart ein Verfahren zur Befestigung einer Vliesstoffmatte auf einem Kunstharzformteil mittels Ultraschallschweißen. Die dabei verwendete Sonotrode weist eine kreisrunde, ebene Kontaktfläche mit beispielsweise 10 mm Durchmesser auf, von der eine kreuz-, stern-, waben- oder ringförmige Rippenstruktur mit einer Höhe von beispielsweise 1,0 mm und einer Rippenbreite von beispielsweise 0,5 mm absteht.

Es ist Aufgabe der Erfindung, ein Verfahren zur Qualitätsprüfung einer Ultraschallschweißverbindung zwischen einer Gewebelasche und einem Produkt sowie eine entsprechende Vorrichtung und ein Ultraschallschweißsystem bereitzustellen, welche zur Durchführung des Verfahrens geeignet sind. Eine weitere Aufgabe der Erfindung ist es, ein Dokument mit einer Ultraschallschweißverbindung zwischen einer Gewebelasche und einem Dokumentenkörper mit verbesserten Dokumentensicherheit bereitzustellen.

Die der Erfindung zugrunde liegenden Aufgaben werden mit den Merkmalen der unabhängigen Patentansprüche gelöst. Ausführungsformen der Erfindung sind in den abhängigen Ansprüchen angegeben.

Wie hierin verwendet, ist die Festigkeit einer Ultraschallschweißverbindung, durch die eine Gewebelasche in ein thermoplastisches Material eingeschmolzen ist, dadurch definiert, dass die zum Herausreißen der Gewebelasche aus dem thermoplastischen Material benötigte Kraft sprunghaft ansteigt. Dies wird im Allgemeinen dadurch erreicht, dass das Gewebe und das thermoplastische Material eine innige Verbindung miteinander eingehen, also vorzugsweise die Maschen des Gewebes vollständig vom thermoplastischen Material umschlossen sind.

Im Verschleißfall geht ein Teil der Ultraschallenergie aufgrund von zunehmender Dämpfung innerhalb der Sonotrode verloren, sodass die nominelle Mindestdauer des Schweißvorgangs zum Herstellen einer festen Ultraschallschweißverbindung nicht mehr ausreicht. Da aus Gründen der Wirtschaftlichkeit jedoch ein Interesse an einer möglichst kurzen Schweißdauer knapp oberhalb der Mindestschweißdauer besteht, macht sich dieser Prozess durch eine zunehmende Anzahl fehlerhafter Ultraschallschweißverbindungen bemerkbar, bei denen das thermoplastische Material nicht vollständig aufgeschmolzen wurde.

In einem Aspekt stellt die Erfindung ein Qualitätsprüfungsverfahren für eine Ultraschallschweißverbindung zwischen einer Gewebelasche und einem Produkt bereit, wobei die Gewebelasche ein Gewebe mit Fäden aufweist, wobei die Fäden in einer Richtung eine Gewebe-Ortsfrequenz aufweisen, wobei das Produkt zumindest in einem die Ultraschallschweißverbindung aufweisenden Überlappungsbereich mit der Gewebelasche ein thermoplastisches Material aufweist, wobei die Ultraschallschweißverbindung in der Richtung hintereinander mit einer von der Gewebe-Ortsfrequenz verschiedenen Sonotroden-Ortsfrequenz angeordnete Schweißpunkte aufweist, wobei das Verfahren umfasst:
- Messen von Strukturdaten der Ultraschallschweißverbindung;
- Berechnen einer Frequenzverteilung der Strukturdaten; und
- Verwenden eines Wertes der Frequenzverteilung zum Bestimmen einer Qualitätskennzahl, wobei der Wert zumindest einen Wert der Frequenzverteilung bei der Sonotroden-Ortsfrequenz und / oder bei der Gewebe-Ortsfrequenz aufweist,
wobei die Qualitätsprüfung bestanden ist, wenn die Qualitätskennzahl in einem vorgegebenen Wertebereich liegt.

Die Messung der Strukturdaten kann mit einem beliebigen zerstörungsfreien Messverfahren erfolgen, das geeignet ist, um die Struktur der Gewebelasche und der Sonotrodenanordnung mit ausreichender Auflösung wiederzugeben. Beispielsweise lässt sich die Oberflächenstruktur der Ultraschallschweißverbindung durch mikroskopische Verfahren in Reflexion ausmessen. Mittels transmissiver Verfahren, beispielsweise im Röntgen-, Infrarot- oder Terahertzbereich lassen sich zwei- oder dreidimensionale Strukturdaten aufgrund von Unterschieden in der Zusammensetzung generieren. Weiterhin könnten hochauflösende mechanische Verfahren (Abtasten) oder hochempfindliche Oberflächenanalyseverfahren (zum Beispiel Rasterelektronenmikroskopie mit angeschlossener Röntgenanalyse und / oder MHz-Ultraschallreflexion) zum Messen der Strukturdaten geeignet sein. Die Strukturdaten können auch als eindimensionaler Datensatz erhoben werden, zum Beispiel durch einen Zeilenscan parallel zu einer Erstreckungsrichtung der Gewebefäden.

Unter einem "Faden" wird hierin ein eindimensionaler Strang aus Natur-, Kunst- oder Metallfaser verstanden. Der Faden kann in Form eines Einfachgarns bzw. als Monofilament oder alternativ als aus mehreren Einfachgarnen zusammengesetzter Zwirn vorliegen. Ein "Gewebe" bezeichnet hierin ein aus sich in regelmäßiger Weise kreuzenden Fäden gewebtes Produkt.

Unter einer "Frequenzverteilung" wird hierin ein Datensatz verstanden, der die spektrale Verteilung einer Amplitude, Intensität, Leistungsdichte oder einer beliebigen anderen Messgröße wiedergibt, mit der die Strukturdaten der Ultraschallschweißverbindung in einer vorgegebenen Richtung gemäß einer Ausführungsform der Erfindung erfasst wurden. Ist in der ausgewerteten Richtung beispielsweise nur die Struktur der Gewebelasche erkennbar, so enthält die Spektralfunktion einen Ausschlag oder eine Spektrallinie bei der Gewebe-Ortsfrequenz. Weisen die Strukturdaten mehr als eine Dimension auf, so kann die Spektralfunktion beispielsweise aus einer ausgewählten oder vorgegebenen Zeile oder Achse der Strukturdaten bestimmt werden, oder es könnte zum Beispiel über die Daten in einer höheren Dimension gemittelt oder aufsummiert werden, sodass man die Frequenzverteilung einer eindimensionalen Projektion der Strukturdaten erhält. Alternativ könnte ein höherdimensionales Verfahren wie die zweidimensionale Fourier-Transformation verwendet werden.

Es wird davon ausgegangen, dass die Werte der Messgröße auf einem diskreten, endlichen Genauigkeitsraster über einer endlichen Menge von diskreten Messpunkten im Ortsraum vorliegen, sodass beispielsweise mit einem die diskrete Fourier-Transformation (DFT) implementierenden Algorithmus eine Frequenzverteilung der Messwerte auf einem diskreten, endlichen Genauigkeitsraster über einer endlichen Menge von diskreten Stützpunkten im Frequenzraum berechnet werden kann.

Ohne Beschränkung der Allgemeinheit wird vorliegend davon ausgegangen, dass eine Frequenzverteilung Extremwerte in Form von Maxima über einer gedachten Nulllinie enthält, so wie es bekanntermaßen insbesondere für Emissions-, Reflexions- oder Streuspektren der Fall ist (größere Amplituden entsprechen einem höheren Emissions-, Reflexions- oder Streuvermögen). Es ist jedoch dem Fachmann selbstverständlich bekannt, dass Extremwerte in einer Frequenzverteilung auch ins Negative orientiert sein können, so wie es insbesondere bei Absorptionsspektren der Fall ist (kleinere Amplituden entsprechen einem größeren Absorptionsvermögen). In einem solchen Fall findet das hierin Gesagte jeweils auf die Minima Anwendung, da hierin mit "Maxima" allgemein die zumindest lokalen Extremwerte der Frequenzverteilung gemeint sind.

Liegt beispielsweise eine Frequenzverteilung A(k) von Amplitudenmesswerten A(x) vor, so kann hierin für eine beliebige gegebene Ortsfrequenz k₀ ein "Wert bei der Frequenz k₀" der Frequenzverteilung als der Wert A(k₀) verstanden werden, falls es sich bei k₀ um eine Stützstelle der Frequenzverteilung handelt. Es kann damit jedoch auch der Wert eines lokalen Maximums (Extremwert einer Spektrallinie) gemeint sein, welches der gegebenen Ortsfrequenz k₀ am nächsten kommt, da Spektrallinien von Messwerten gegenüber ihrer theoretischen Form und / oder Mittenfrequenz verbreitert und / oder verschoben sein können. Insbesondere ist es möglich, dass ein "Wert der Frequenzverteilung" eine Summe von Werten A(kᵢ) der Frequenzverteilung bei aufeinanderfolgenden diskreten Stützstellen kᵢ ist, um die Linienbreite in dem gewünschten Wert mit zu berücksichtigen. Dabei richtet sich die Anzahl der aufeinanderfolgenden oder benachbarten Werte nach der beobachteten Linienbreite und der gegebenen Frequenzauflösung.

Allgemein kann es sich hierin bei einem "Wert" einer Frequenzverteilung bei einer gegebenen Ortsfrequenz k₀ aus der Menge der diskreten Stützfrequenzen um einen derjenigen Werte A(k₀) handeln, die im Zuge des Berechnens der Frequenzverteilung aus den gemessenen Strukturdaten berechnet wurden. Alternativ handelt es sich bei einem Wert einer Frequenzverteilung um ein aus den berechneten Werten A(k₀) abgeleitetes Signal-zu-Rausch-Verhältnis (signal-to-noise ratio, SNR). Handelt es sich bei k₀ nicht um eine Stützfrequenz, so kann der Wert der Frequenzverteilung einer der berechneten Werte der Frequenzverteilung bei einer benachbarten Stützfrequenz von k₀ sein. Alternativ dazu kann der Wert bei k₀ beispielsweise durch Mittelung, Interpolation oder dergleichen aus den berechneten Werten der Frequenzverteilung bei zwei oder mehreren benachbarten Stützfrequenzen bestimmt werden.

Unter einer Qualitätskennzahl wird hierin ein aus der Frequenzverteilung abgeleitetes Maß für die Festigkeit der Ultraschallschweißverbindung verstanden. Vorzugsweise verwendet die Qualitätskennzahl einen Spektralwert der Frequenzverteilungen bei der Sonotroden-Ortsfrequenz oder bei der Gewebe-Ortsfrequenz, um auszunutzen, dass die Strukturdaten vor dem Schweißvorgang nur Signale der Gewebelasche enthalten und dass nach einem erfolgreichen Schweißvorgang nur noch das Muster der Schweißpunkte mit der Sonotroden-Ortsfrequenz nachweisbar sind. Wie jedoch bei der Diskussion der Figuren weiter unten ausführlicher erläutert wird, kann die Qualitätskennzahl alternativ die Festigkeit der Ultraschallschweißverbindung indirekt nachweisen, beispielsweise durch einen oder mehrere Spektralwerte bei der von der Gewebe-Ortsfrequenz und der Sonotroden-Ortsfrequenz verschiedenen Frequenzen, ein Streuungsmaß und/oder eine Rauschzahl.

Ausführungsformen der Erfindung könnten den Vorteil haben, dass ein Verfahren zur schonenden Prüfung der Festigkeit von Ultraschallschweißverbindungen bereitgestellt wird. Es wird beurteilt, inwiefern die Qualität der Ultraschallschweißverbindung gegeben ist. Eine fehlerhafte Ultraschallschweißverbindung könnte gemäß dem obigem Verfahren messbar dadurch von einer festen Ultraschallschweißverbindung unterscheidbar sein, dass in diesem Fall die Struktur der Fäden bzw. Maschen der Gewebelasche zum Beispiel in einem hochaufgelösten Höhenprofil der Ultraschallschweißverbindung noch nachweisbar ist. Bei einer festen Ultraschallschweißverbindung hingegen werden die Gewebefäden von der Schmelze vollständig eingehüllt, sodass zwischen den Kontaktpunkten der zum Schweißen verwendeten Sonotrodenanordnung nach dem Erstarren des thermoplastischen Materials eine homogene Struktur zurückbleibt, die sich im Beispiel auf einem konstanten Höhenniveau befindet. Die räumliche Struktur der der Sonotrodenanordnung entsprechenden Schweißpunkte bleibt somit als einziges messbares Strukturmerkmal einer festen Ultraschallschweißverbindung zurück.

Die charakteristische Länge des Gewebematerials (Maschenweite) sollte sich im Allgemeinen von der Struktur der Sonotrodenanordnung (regelmäßiger Abstand der Schweißpunkte) unterscheiden. Dies ist zum Beispiel wünschenswert, um eine Schwächung der Gewebestruktur durch den Schweißvorgang zu verhindern. Die Schweißpunkte und die Gewebefäden unterscheiden sich somit in ihrer Ortsfrequenz. Ein Nachweis einer fehlerhaften Ultraschallschweißverbindung könnte also dadurch erfolgen, dass die Struktur nacheinander hergestellter Ultraschallschweißverbindungen ausgemessen wird, daraus eine Frequenzverteilung berechnet und darin die Signalstärke bei der Ortsfrequenz der Gewebefäden überwacht wird.

Das Verfahren könnte in einer Fertigungsstraße implementiert werden, sodass eine laufende und lückenlose Qualitätskontrolle des Fertigungsschritts der Ultraschallschweißverbindung ermöglicht würde. So ließe sich beispielsweise mit einer Regelkarte eine engmaschige Funktions- oder Lebensdauerüberwachung der zum Ultraschallschweißen verwendeten Sonotrode realisieren.

Auf analoge Weise könnten die Strukturdaten kontinuierlich erfasst und ausgewertet sowie für eine Regelung des Schweißvorgangs verwendet werden. Beispielsweise könnten Anzeichen von beginnendem Verschleiß auf einer Regelkarte oder durch einen Computeralgorithmus erkannt werden und als Reaktion darauf die Betriebsfrequenz und / oder -amplitude der Sonotrode angepasst werden, um eine kontinuierlich hohe Qualität der gefertigten Ultraschallschweißverbindungen zu gewährleisten.

Ein weiterer Vorteil könnte sein, dass die gemessenen Strukturdaten und/oder die daraus berechnete Frequenzverteilung im Detail spezifisch für jede einzelne Ultraschallschweißverbindung sein könnten, wodurch eine Möglichkeit zur Individualisierung des mit der Gewebelasche verschweißten Produkts geschaffen werden könnte.

Gemäß einer Ausführungsform umfasst das Messen der Strukturdaten einen Zeilenscan in der Richtung, wobei sich der von dem Zeilenscan erfasste Bereich der Ultraschallschweißverbindung über eine Vielzahl der Fäden und eine Vielzahl der Schweißpunkte erstreckt. Die Verwendung eines Zeilenscans könnte die Durchführung des Verfahrens beschleunigen, da ein Zeilenscan in der Regel schneller abläuft als eine zweidimensionale Bilderfassung. Ein Zeilenscan erzeugt typischerweise ein kleineres Datenvolumen als eine zweidimensionale Bilderfassung und liefert eine Datenzeile, d.h. eine eindimensionale Datenstruktur, die für sich genommen mit einem vereinfachten Verfahren analysiert werden kann als ein zweidimensionales Bild. Beides könnte dazu führen, dass die Analyse der Strukturdaten in kürzerer Zeit durchgeführt werden kann und dass geringere Anforderungen an Umfang und Leistungsfähigkeit der Datenverarbeitungs-Hardware für die Analyse entstehen.

Gemäß einer Ausführungsform umfasst das Messen zusätzlich eine Wiederholung des Zeilenscans zur Erfassung eines anderen Bereichs der Ultraschallschweißverbindung, wobei jeder der Zeilenscans eine Datenzeile der Strukturdaten erzeugt, wobei das Berechnen der Frequenzverteilung für jede der Datenzeilen einzeln erfolgt, wobei der Wert der Frequenzverteilung zum Bestimmen der Qualitätskennzahl einer Frequenzverteilung mit einem im Vergleich zu den Frequenzverteilungen der übrigen Datenzeilen größten Wert bei der Sonotroden-Ortsfrequenz entnommen wird. Vorzugsweise haben alle Zeilenscans die gleiche Länge und liegen äquidistant und parallel zueinander.

Verglichen mit einer zweidimensionalen Bilderfassung könnte eine Wiederholung von Zeilenscans den Vorteil haben, dass man den Abstand zwischen zwei aufeinanderfolgenden Zeilenscans wählen kann. Auf diese Weise könnte es möglich sein, die Struktur der Ultraschallschweißverbindung in einem größeren Bereich mit hoher Auflösung zu erfassen. Durch Auswahl einer Datenzeile, deren Frequenzverteilung die Struktur der Sonotroden-Schweißpunkte mit der größten Amplitude wiedergibt, könnte die Aussagekraft der Qualitätskennzahl erhöht werden und somit die Abweichung des Prüfungsergebnisses von der tatsächlichen Qualität der Ultraschallschweißverbindung verringert werden. Außerdem könnte die Datenverarbeitung nach der Auswahl ausschließlich mit der ausgewählten Datenzeile fortgesetzt werden, also mit einer kleineren Datenmenge als der Gesamtheit aller durchgeführten Zeilenscans, was das Verfahren weiter beschleunigen könnte.

Gibt es mehr als eine Datenzeile, deren Frequenzverteilung im Vergleich zu den Frequenzverteilungen der übrigen Datenzeilen einen größten Wert bei der Sonotroden-Ortsfrequenz aufweist, so kann ein weiteres Kriterium verwendet werden, um aus der Menge der zutreffenden Frequenzverteilungen eine Frequenzverteilung mit hoher Aussagekraft auszuwählen. Beispielsweise könnte ein weiteres Kriterium zur Auswahl herangezogen werden, das die Differenz, das Verhältnis, die Modulation und / oder dergleichen zwischen einem Wert bei der Sonotroden-Ortsfrequenz und einem Wert bei der Gewebe-Ortsfrequenz, eine Rauschbreite und / oder einen Rauschpegel enthält. Alternativ wäre es möglich, die zutreffenden Frequenzverteilungen bei jeder Stützfrequenz aufzusummieren, zu mitteln oder dergleichen und die Verarbeitung mit der mittleren oder summierten Frequenzverteilung fortzusetzen.

Gemäß einer Ausführungsform umfasst das Messen zusätzlich eine Wiederholung des Zeilenscans zur Erfassung eines anderen Bereichs der Ultraschallschweißverbindung, wobei jeder der Zeilenscans eine Datenzeile der Strukturdaten erzeugt, wobei das Berechnen der Frequenzverteilung für jede der Datenzeilen einzeln bei einem Satz von für alle Datenzeilen identischen Testfrequenzen erfolgt, wobei das Verfahren zusätzlich, für jede der Testfrequenzen, ein Aufsummieren des jeweiligen Wertes der Frequenzverteilung jeder Datenzeile bei der gegebenen Testfrequenz zu einer Summen-Frequenzverteilung umfasst, wobei der Wert der Frequenzverteilung zum Bestimmen der Qualitätskennzahl der Summen-Frequenzverteilung entnommen wird.

Die so bestimmte Summen-Frequenzverteilung enthält also eine Amplitude, die den Strukturgehalt auf der gesamten Breite des gescannten Bereichs der Ultraschallschweißverbindung in der genannten Richtung wiedergibt. Ein Aufsummieren der Amplituden aller Frequenzverteilungen bei jeder Stützfrequenz könnte darum den Aufwand zur Implementierung des Verfahrens reduzieren, da keine Prozedur zum Erkennen und / oder Auswählen einer Datenzeile programmiert werden muss. Durch das Entfallen entsprechender algorithmischer Teilschritte könnte das Verfahren in kürzerer Zeit durchgeführt und / oder der Rechenaufwand zur Qualitätsprüfung reduziert werden. Es versteht sich, dass das Summieren auch für zeilen- und / oder spaltenweise berechnete Frequenzverteilungen eines zweidimensionalen Bilddatensatzes durchgeführt werden kann.

Gemäß einer Ausführungsform ist die Qualitätskennzahl proportional zum Verhältnis des Wertes der Frequenzverteilung bei der Sonotroden-Ortsfrequenz zum Wert der Frequenzverteilung bei der Gewebe-Ortsfrequenz ist, wobei der vorgegebene Wertebereich so definiert ist, dass die Qualitätsprüfung bestanden ist, wenn das Verhältnis größer oder gleich 3 ist, bevorzugt größer oder gleich 5, besonders bevorzugt größer oder gleich 10. Das Verhältnis der Werte bei den beiden genannten Ortsfrequenzen könnte ein besonders aussagekräftiges Maß für die Festigkeit der Ultraschallschweißverbindung sein. Gemäß einer Ausführungsform weist der zum Bestimmen der Qualitätskennzahl verwendete Wert die Summe eines lokalen Maximums der Frequenzverteilung bei der Sonotroden-Ortsfrequenz sowie benachbarter Werte der Frequenzverteilung in einem vordefinierten Frequenzbereich um die Sonotroden-Ortsfrequenz und / oder die Summe eines lokalen Maximums der Frequenzverteilung bei der Gewebe-Ortsfrequenz sowie benachbarter Werte der Frequenzverteilung in einem vordefinierten Frequenzbereich um die Gewebe-Ortsfrequenz auf. Auf diese Weise wird die Datenbasis für die Berechnung der Qualitätskennzahl vergrößert, was die Signifikanz der Qualitätskennzahl insbesondere bei schwachen und / oder verbreiterten Spektrallinien erhöhen könnte.

Gemäß einer Ausführungsform stehen die Gewebe-Ortsfrequenz und die Sonotroden-Ortsfrequenz in einem nicht-ganzzahligen Zahlenverhältnis zueinander. Bei einem ganzzahligen Zahlenverhältnis der genannten Ortsfrequenzen könnte es sehr wahrscheinlich sein, dass es regelmäßig zu einer Überlagerung der Gewebefäden und der Schweißkontaktpunkte kommt. Um eine solche Überlagerung bei einem ganzzahligen Zahlenverhältnis zu vermeiden, wäre eine hochpräzise Positionierung (µm-Bereich) der Gewebelasche relativ zur zum Verschweißen verwendeten Sonotrodenanordnung erforderlich. Bei einem nicht-ganzzahligen Zahlenverhältnis hingegen könnte es einen variablen Abstand zwischen den Kontaktpunkten und den Gewebefäden geben, sodass es wahrscheinlich wäre, dass Überlagerungen sich auf zufällige Einzelfälle beschränken. Somit könnte ein nichtganzzahliges Zahlenverhältnis dazu führen, dass die Strukturen von Gewebe und Kontaktpunkten in ausreichendem Umfang zur Messung der Strukturdaten zur Verfügung stehen und vom Messvorgang erfasst werden können. Dies könnte eine bessere Wiedergabe der tatsächlichen Struktur der Ultraschallschweißverbindung in den Strukturdaten bewirken und somit die Zuverlässigkeit des Verfahrens verbessern.

Gemäß einer Ausführungsform ist das nicht-ganzzahlige Zahlenverhältnis mindestens 10% größer oder kleiner als ein nächstes ganzzahliges Zahlenverhältnis. Dies könnte den Vorteil haben, dass die Strukturen von Gewebefäden und Sonotroden-Kontaktpunkten deutlicher voneinander getrennt sind. Bei einer zu kleinen Differenz von einem ganzzahligen Zahlenverhältnis könnten im Fall einer zufälligen Überlagerung der beiden Strukturen in einem gegebenen Bereich der Ultraschallschweißverbindung weitere Überlagerungen in dazu benachbarten Bereichen entstehen, sodass ein signifikanter Teil vor allem der Gewebestruktur nicht von der Messung erfasst werden könnte.

Gemäß einer Ausführungsform weisen die Strukturdaten ein Höhenprofil der Ultraschallschweißverbindung auf. Dem liegt die Beobachtung zugrunde, dass die Maschen und Fäden des Gewebes bei erfolgreicher, fester Ultraschallschweißung vollständig von der erstarrten Schmelze des thermoplastischen Materials umschlossen werden. Somit sind die Höhenunterschiede zwischen Fäden und Maschen bei einer festen Ultraschallschweißverbindung nicht mehr messbar. Es könnte sich bei dem Höhenprofil also um eine besonders aussagekräftige Messgröße zur Beurteilung der Qualität einer thermoplastischen Ultraschallschweißverbindung mit einer Gewebelasche handeln.

Gemäß einer Ausführungsform erfolgt das Messen des Höhenprofils durch mechanische Abtastung der Ultraschallschweißverbindung. Auf diese Weise könnte das Höhenprofil mit geringerer Streuung als beispielsweise einem optischen Verfahren vermessen werden.

Gemäß einer Ausführungsform erfolgt das Messen der Strukturdaten durch Reflexion und / oder Streuung elektromagnetischer Wellen, bevorzugt durch elektromagnetische Wellen im sichtbaren Bereich. Beispielsweise könnte die Ultraschallschweißverbindung mit einem Laserscanner mit hoher Geschwindigkeit abgetastet werden, was eine Durchführung des Verfahrens in kürzerer Zeit erlauben könnte. Durch die gegebene Berührungsfreiheit könnte eine Beeinflussung der Struktur durch den Messvorgang erheblich reduziert werden. Der sichtbare Bereich des elektromagnetischen Spektrums könnte dabei eine hohe Ortsauflösung erlauben und eine geeignete Lichtquelle könnte aus einem großen Markt von Produkten bedarfsgerecht ausgesucht werden.

Gemäß einer Ausführungsform erfolgt das Messen der Strukturdaten durch Triangulation. Gemäß einer Ausführungsform erfolgt die Triangulation mittels elektromagnetischer Wellen, bevorzugt im sichtbaren Bereich, und / oder akustischer Wellen, bevorzugt zwischen 10 und 100 MHz. Zur Triangulation sind zumindest ein Wellengenerator (z.B. Lichtquelle, Ultraschallsender) sowie ein passender Sensor (z.B. CMOS-/CCD-Kamera, Ultraschallempfänger) erforderlich. Bei fester Installation an bekannten Positionen kann der von Quelle und Sensor bzw. dessen Sensorelementen mit der Ultraschallschweißverbindung eingeschlossene Winkel rechnerisch bestimmt werden. Somit könnte die Komplexität der zur Inspektion der Ultraschallschweißverbindung nötigen Apparatur bei einem auf Triangulation basierenden Messverfahren minimiert werden. Die bevorzugten Spektralbereiche könnten zur hochauflösenden Strukturvermessung (z.B. im Bereich 3 - 30 µm pro Bildpunkt) besonders geeignet sein.

Gemäß einer Ausführungsform erfolgt das Messen der Strukturdaten durch Transmission elektromagnetischer Wellen, bevorzugt durch elektromagnetische Wellen im Infrarot-, Terahertz- und / oder Röntgenbereich. Die Transmission stellt eine Alternative oder Ergänzung zur Strukturvermessung durch Streuung oder Reflexion dar. Auf diese Weise könnte die Struktur der Ultraschallschweißverbindung beispielsweise durch die Beeinflussung von Amplitude und / oder Phase der transmittierten Wellen aufgrund von unterschiedlicher Wechselwirkung des Gewebematerials bzw. des thermoplastischen Materials mit hoher Empfindlichkeit ermittelt werden. Dabei könnten auch Schwankungen der optischen Dichte aufgrund von lokalen Dickenunterschieden hochempfindlich nachweisbar sein. Aufgrund der vergleichsweise höheren relativen Messempfindlichkeit könnte ein Transmissionsverfahren vor allem für Ultraschallschweißverbindungen geringer Dicke (beispielsweise bis zur 10-fachen Tiefe der Kontaktpunkte oder bis zu 3 mm) vorteilhaft sein. Wegen des hohen Auflösungsvermögens könnte eine Vermessung durch Röntgentransmission besonders vorteilhaft sein.

Gemäß einer Ausführungsform umfasst das Verfahren zusätzlich ein Erfassen eines Großbildes mit einer ersten Auflösung, wobei das Großbild vorläufige Strukturdaten zumindest der Ultraschallschweißverbindung umfasst, wobei das Verfahren zusätzlich ein Erkennen eines bevorzugten Bildbereichs des Großbildes umfasst, wobei der bevorzugte Bildbereich die vorläufigen Strukturdaten der Ultraschallschweißverbindung umfasst, wobei das Messen der Strukturdaten durch Erfassen eines Detailbildes mit einer zweiten Auflösung in dem bevorzugten Bildbereich erfolgt, wobei die zweite Auflösung größer als die erste Auflösung ist. Auf diese Weise könnte die Datenmenge der in hoher Auflösung erfassten Strukturdaten reduziert werden, sodass zur Verarbeitung und / oder Archivierung der Strukturdaten weniger Speicherkapazität benötigt würde. Dies könnte insbesondere vorteilhaft sein, wenn die Strukturdaten des Detailbildes oder daraus abgeleitete Daten im Speicher eines Dokuments hinterlegt werden sollen, da dort z.B. aus Platzgründen oft nur eine begrenzte Speicherkapazität realisiert werden kann.

In einem Beispiel wird der durchschnittliche Durchmesser der Fäden als Kriterium zur Unterscheidung zwischen niedriger und hoher Auflösung verwendet. Zunächst werden die vorläufigen Strukturdaten in Form von Bildpunkten des Großbildes erfasst, wobei jeder der Bildpunkte des Großbildes eine erste Teilfläche der Ultraschallschweißverbindung und / oder einer Umgebung der Ultraschallschweißverbindung abbildet. Dabei wird die niedrige Auflösung dadurch erreicht, dass keine der abgebildeten ersten Teilflächen kleiner als das Quadrat des Nenndurchmessers der Fäden ist. Der Teilschritt des Segmentierens führt nun dazu, dass alle Bildpunkte des Großbildes, deren jeweils abgebildete erste Teilfläche zu mindestens 50% im Bereich der Ultraschallschweißverbindung liegt, in einem Hauptsegment zusammengefasst werden. Dieses Hauptsegment lässt sich dann zur Definition des Erfassungsbereiches für das Detailbild verwenden: Jeder der Bildpunkte des Detailbildes bildet eine zweite Teilfläche der Ultraschallschweißverbindung und / oder der Umgebung ab, wobei jede der zweiten Teilflächen zu mindestens 50% mit denjenigen der ersten Teilflächen überlappt, deren Bildpunkte des Großbildes im Hauptsegment liegen. Die hohe Auflösung wird dadurch erzielt, dass keine der abgebildeten zweiten Teilflächen größer ist als das Quadrat des halben Nenndurchmessers der Fäden. Nach der Erfassung des Detailbildes werden zum Berechnen der Frequenzverteilung ausschließlich die Bildpunkte des Detailbildes verwendet.

Gemäß einer Ausführungsform ist das thermoplastische Material ein Polycarbonat. Polycarbonate sind typischerweise u.a. im visuellen Bereich des elektromagnetischen Spektrums transparent und könnten daher für Transmissionsmessungen nach Ausführungsformen der Erfindung besonders gut geeignet sein.

Gemäß einer Ausführungsform erfolgt das Messen der Strukturdaten in zwei Dimensionen, wobei das Berechnen der Frequenzverteilung in den zwei Dimensionen erfolgt, wobei zur Bestimmung der Qualitätskennzahl Werte der Frequenzverteilung in den zwei Dimensionen verwendet werden. Eine Frequenzverteilung in zwei verschiedenen, nicht-parallelen Richtungen könnte Strukturinformationen über die Ultraschallschweißverbindung liefern, die über den Informationsgehalt einer eindimensionalen Frequenzverteilung hinausgehen. Beispielsweise kann es vorkommen, dass die Strukturdaten die tatsächliche Struktur der Ultraschallschweißverbindung etwa aus messtechnischen Gründen in einer der Richtungen deutlicher wiedergeben als in der anderen. In diesem Fall wären die Amplituden in einer der einen Richtung entsprechenden Frequenzverteilung (bei konstantem Frequenzkanal in der anderen Richtung) schwächer ausgeprägt als in der anderen. Ein Vergleich der Signalamplitude bei einer interessierenden Frequenz zwischen den beiden Richtungen (bei variabler Frequenz in der jeweils anderen Richtung im Frequenzraum) könnte dazu verwendet werden, um festzustellen, ob sich das gesuchte Maximum bei der festen Frequenz in einer Spalte oder einer Zeile des 2D-Frequenzdiagramms befindet. Somit könnte im Beispiel die Spalten-Frequenzverteilung zur Berechnung der Qualitätskennzahl verwendet werden, falls die Frequenzverteilung in der den Zeilen entsprechenden Richtung schwächer ausgeprägt ist als in den entsprechenden Spaltenverteilungen. Auf diese Weise könnte die Abweichung zwischen gemessener und tatsächlicher Struktur reduziert werden.

Gemäß einer Ausführungsform weist die Qualitätskennzahl die Modulation zwischen dem Wert der Frequenzverteilung bei der Sonotroden-Ortsfrequenz und dem Wert der Frequenzverteilung bei der Gewebe-Ortsfrequenz auf. Bei der Modulation, die auch als Michelson-Kontrast bekannt ist, zwischen den Amplituden A bei der Sonotroden-Ortsfrequenz k_{S} und der Gewebe-Ortsfrequenz k_{G} handelt es sich um die Größe [A(k_{S}) - A(k_{G})] / [A(k_{S}) + A(k_{G})]. Die Modulation könnte eine besonders vorteilhafte Qualitätskennzahl liefern, da sie sowohl Merkmale einer Differenz als auch eines Quotienten aufweist. So könnte die Modulation eine Beurteilung der Differenz der beteiligten Werte unabhängig von ihrer Größenordnung ermöglichen, da die besagte Differenz stets im Verhältnis zur Summe der beiden Werte betrachtet wird.

Gemäß einer Ausführungsform weist das Produkt einen integrierten elektronischen Schaltkreis mit einem nicht-flüchtigen Speicher auf, wobei das Verfahren zusätzlich ein Schreiben zumindest eines Teils der Strukturdaten, zumindest eines Teils der Frequenzverteilung und / oder der Qualitätskennzahl in den Speicher umfasst. Dies könnte eine Nachkontrolle oder Verifikation der Ultraschallschweißverbindung ermöglichen, beispielsweise um Alterungs- und / oder Abnutzungserscheinungen der Ultraschallschweißverbindung nach längerem Gebrauch erkennen zu können. Ferner könnte so ermöglicht werden, zu erkennen, ob die Verbindung nach dem Verschweißen wieder gelöst wurde. Eine gelöste und mit bloßem Auge unsichtbar wieder neu zusammengefügte Verbindung zwischen Gewebelasche und Produkt würde mit hoher Wahrscheinlichkeit nicht mehr dieselbe Struktur aufweisen wie nach dem Ultraschallschweißen beispielsweise bei der Herstellung, während der die Strukturdaten erfasst und gespeichert wurden. Somit wird ein unbestechliches Messverfahren bereitgestellt, mit dem sich Manipulationen der Ultraschallschweißverbindung erkennen lassen könnten.

Gemäß einer Ausführungsform ist in der Struktur der Schweißpunkte eine Information codiert, wobei das Verfahren zusätzlich ein Decodieren der Information aus den Strukturdaten aufweist, wobei die Qualitätsprüfung bestanden ist, wenn die decodierte Information mit einer vorbestimmten codierten Information übereinstimmt. Dies könnte den Vorteil haben, dass die Ultraschallschweißverbindung zum Verbergen der Information genutzt werden kann.

Auf diese Weise ließen sich zum Beispiel eine vorbestimmte Authentizitäts- und / oder Individualisierungsinformation in der Ultraschallschweißverbindung unterbringen, ohne dass die Präsenz dieser Information mit bloßem Auge bzw. ohne technische Hilfsmittel erkennbar wäre. Auch könnte die Codierung einer vorbestimmten Information in einer Ultraschallschweißverbindung die Fälschungssicherheit des Produkts erhöhen, da ein zum Codieren der vorbestimmten Information angewendetes Ultraschallschweißverfahren eine hohe Präzision aufweisen müsste.

Die vorbestimmte Information ist beispielsweise mithilfe einer Sonotrodenanordnung aus unabhängig steuerbaren Einzelsonotroden in die Ultraschallschweißverbindung codiert worden, sodass diese bei jedem Schweißpunkt beispielsweise ein individuelles Reflexions- oder Transmissionsvermögen oder Höhenniveau aufweist. In einem spezifischen Beispiel ist die Struktur jedes Schweißpunkts on-off-codiert, sodass man in der regelmäßigen Struktur der Schweißpunkte ein zweidimensionales optisches Muster wie beispielsweise einen QR-Code codieren könnte. Weitere Ausführungsformen implementieren eine mehrstufige Codierung je Schweißpunkt.

Die die vorbestimmte Information codierenden lokalen strukturellen Charakteristika der Ultraschallschweißverbindung werden bei der Messung der Strukturdaten mit erfasst und stehen somit zur Decodierung der Information vor oder nach der Fourier-Transformation zur Verfügung. Somit kann die aus den Strukturdaten decodierte Information mit der vorbestimmten Information verglichen werden. Auf diese Weise könnte ein Codierungsfehler rechtzeitig vor Freigabe des Produkts erkannt werden.

Gemäß Ausführungsformen ist die Richtung eine Kett- oder Schussrichtung des Gewebes. Hierdurch könnte bei der Gewebe-Ortsfrequenz ein höherer Wert im Frequenzdiagramm erzielt werden. Beispielsweise könnte eine nichtparallele Ausrichtung der Schweißpunkte relativ zum Gewebe in der Frequenzverteilung eine Aufspaltung auf zwei verschiedene Gewebe-Ortsfrequenzen bewirken. Dabei könnten die Werte der Frequenzverteilung bei beiden Gewebe-Ortsfrequenzen kleiner sein als bei einer Frequenzverteilung ohne Aufspaltung. Zudem könnte die Möglichkeit einer Überlappung mit Signalen bei der Sonotroden-Ortsfrequenz bestehen. Somit könnte bei Wahl der Richtung als Kett- oder Schussrichtung des Gewebes das Entstehen einer festen Ultraschallschweißverbindung empfindlicher und zuverlässiger nachgewiesen werden.

In einem weiteren Aspekt stellt die Erfindung eine Vorrichtung zur Qualitätsprüfung einer Ultraschallschweißverbindung zwischen einer Gewebelasche und einem Produkt bereit, wobei die Gewebelasche ein Gewebe mit Fäden aufweist, wobei die Fäden in einer Richtung eine Gewebe-Ortsfrequenz aufweisen, wobei die Ultraschallschweißverbindung in der Richtung hintereinander mit einer von der Gewebe-Ortsfrequenz verschiedenen Sonotroden-Ortsfrequenz angeordnete Schweißpunkte aufweist, wobei die Vorrichtung eine Messeinheit sowie eine Rechnereinheit aufweist, wobei die Rechnereinheit in kommunikativer Verbindung mit der Messeinheit steht, wobei die Rechnereinheit zum Steuern der Messeinheit zum Messen von Strukturdaten der Ultraschallschweißverbindung in der Richtung ausgebildet ist, wobei die Rechnereinheit einen Prozessor sowie einen Speicher aufweist, wobei in dem Speicher Programmbefehle gespeichert sind, wobei die Programmbefehle bei Ausführung durch den Prozessor bewirken, dass die Rechnereinheit Folgendes leistet:
- Berechnen einer Frequenzverteilung der Strukturdaten;
- Verwenden eines Wertes der Frequenzverteilung zum Bestimmen einer Qualitätskennzahl, wobei der Wert zumindest einen Wert der Frequenzverteilung bei der Sonotroden-Ortsfrequenz und / oder bei der Gewebe-Ortsfrequenz aufweist; und
- Beurteilen der Qualitätsprüfung als bestanden, wenn die Qualitätskennzahl in einem vorgegebenen Wertebereich liegt.

Die Messung der Strukturdaten kann mit einer beliebigen zerstörungsfreien Messvorrichtung erfolgen, die geeignet ist, um die Struktur der Gewebelasche und der Sonotrodenanordnung mit ausreichender Auflösung wiederzugeben. Beispielsweise lässt sich die Oberflächenstruktur der Ultraschallschweißverbindung durch mikroskopische Verfahren in Reflexion ausmessen. Mittels transmissiver Verfahren, beispielsweise im Röntgen-, Infrarot- oder Terahertzbereich lassen sich zwei- oder dreidimensionale Strukturdaten aufgrund von Unterschieden in der Zusammensetzung generieren. Weiterhin könnten hochauflösende mechanische Verfahren (Abtasten) oder hochempfindliche Oberflächenanalyseverfahren (zum Beispiel Rasterelektronenmikroskopie mit angeschlossener Röntgenanalyse) zum Messen der Strukturdaten geeignet sein. Die Strukturdaten können auch als eindimensionaler Datensatz erhoben werden, zum Beispiel durch einen Zeilenscan parallel zu einer Erstreckungsrichtung der Gewebefäden. Der Fachmann wird je nach Anwendung, verwendeten Materialien usw. weitere Implementierungsbeispiele konstruieren können, ohne erfinderisch tätig werden zu müssen.

In einem weiteren Aspekt stellt die Erfindung ein Ultraschallschweißsystem bereit, wobei das Ultraschallschweißsystem Folgendes aufweist:
- ein Ultraschallschweißgerät zum Herstellen einer Ultraschallschweißverbindung zwischen einer Gewebelasche und einem Produkt, wobei die Gewebelasche ein Gewebe mit Fäden aufweist, wobei die Fäden in einer Richtung eine Gewebe-Ortsfrequenz aufweisen, wobei das Produkt zumindest in einem für die Ultraschallschweißverbindung vorgesehenen Überlappungsbereich mit der Gewebelasche ein thermoplastisches Material aufweist, wobei das Ultraschallschweißgerät eine Sonotrodenanordnung aufweist, wobei die Sonotrodenanordnung in der Richtung hintereinander mit einer von der Gewebe-Ortsfrequenz verschiedenen Sonotroden-Ortsfrequenz angeordnete Schweißkontakte aufweist; und
- eine Vorrichtung zur Qualitätsprüfung der Ultraschallschweißverbindung gemäß einer Ausführungsform der Erfindung.

Vorteile des erfindungsgemäßen Ultraschallschweißsystems könnten daraus erwachsen, dass die Sonotrodenanordnung mit einer bekannten, willkürlichen Struktur der Schweißkontakte, vorzugsweise einem regelmäßigen Muster, gefertigt werden kann. Bei der Sonotrodenanordnung kann es sich um eine einzelne Sonotrode handeln, die im Überlappungsbereich auf die zu verfügenden Komponenten (zumindest die Gewebelasche und das thermoplastische Material) gepresst wird. Die Sonotrodenanordnung könnte alternativ aus einer Vielzahl kleiner Einzelsonotroden zusammengesetzt sein, um beispielsweise einen anderen Ultraschallfrequenzbereich zu unterstützen. Die Sonotrodenanordnung besitzt in zumindest einer Richtung ein charakteristisches, periodisches Muster und ist in ihrer Form so ausgebildet, dass sie im Überlappungsbereich in Kett- oder Schussrichtung des Gewebes ausgerichtet zum Herstellen der Ultraschallschweißverbindung verwendet werden kann. Vorzugsweise sind die Schweißkontakte auf quadratischen Gitterpositionen angeordnet.

Gemäß einer Ausführungsform weist das Ultraschallschweißsystem zusätzlich ein Mittel zum Steuern der Sonotrodenanordnung zum Codieren einer vorbestimmten Information in der Struktur der Schweißpunkte auf, wobei die Vorrichtung zur Qualitätsprüfung der Ultraschallschweißverbindung zusätzlich zum Decodieren der Information aus den Strukturdaten ausgebildet ist. Dies könnte den Vorteil haben, dass das Ultraschallschweißsystem zum Verbergen der Information in der Ultraschallschweißverbindung genutzt werden kann.

Auf diese Weise ließen sich zum Beispiel eine vorbestimmte Authentizitäts- und / oder Individualisierungsinformation in der Ultraschallschweißverbindung unterbringen, ohne dass die Präsenz dieser Information mit bloßem Auge bzw. ohne technische Hilfsmittel erkennbar wäre. Auch könnte die Codierung einer vorbestimmten Information in einer Ultraschallschweißverbindung die Fälschungssicherheit des Produkts erhöhen, da ein zum Codieren der vorbestimmten Information angewendetes Ultraschallschweißverfahren eine hohe Präzision aufweisen müsste.

Die vorbestimmte Information kann beispielsweise mithilfe einer Sonotrodenanordnung aus unabhängig steuerbaren Einzelsonotroden in die Ultraschallschweißverbindung codiert werden, sodass diese bei jedem Schweißpunkt beispielsweise ein individuelles Reflexions- oder Transmissionsvermögen oder Höhenniveau aufweist. In einem spezifischen Beispiel ist die Struktur jedes Schweißpunkts binär codiert, sodass man in der regelmäßigen Struktur der Schweißpunkte ein zweidimensionales optisches Muster wie beispielsweise einen QR-Code codieren könnte. Weitere Ausführungsformen implementieren eine mehrstufige Codierung je Schweißpunkt.

Die die vorbestimmte Information codierenden lokalen strukturellen Charakteristika der Ultraschallschweißverbindung werden bei der Messung der Strukturdaten mit erfasst und stehen somit zur Decodierung der Information vor oder nach der Fourier-Transformation zur Verfügung. Somit kann die aus den Strukturdaten decodierte Information mit der vorbestimmten Information verglichen werden. Auf diese Weise könnte ein Codierungsfehler rechtzeitig vor Freigabe des Produkts erkannt werden.

Gemäß einer Ausführungsform weist das Ultraschallschweißsystem zusätzlich ein Mittel zum Regeln zumindest eines Betriebsparameters der Sonotrodenanordnung in dem Fall auf, dass die Qualitätsprüfung für zumindest eine Ultraschallschweißverbindung nicht bestanden wurde. Dies könnte den Vorteil haben, dass eine gleichbleibende Qualität von nacheinander hergestellten Ultraschallschweißverbindungen gewährleistet wird. Beispielsweise könnte durch das Verfahren eine kontinuierliche Überwachung der Qualitätskennzahl und / oder deren zeitlicher Entwicklung realisiert werden. Damit könnte ein beginnender Verschleiß der Sonotrodenanordnung durch die Abweichung der Qualitätskennzahl aus dem vorgegebenen Wertebereich frühzeitig erkannt werden. Bei einem Betriebsparameter der Sonotrodenanordnung könnte es sich beispielsweise um die Betriebsfrequenz und / oder -amplitude handeln, mit der die Sonotrodenanordnung zum Einkoppeln akustischer Energie in das thermoplastische Material des Produkts angeregt wird.

In einem weiteren Aspekt stellt die Erfindung ein Verfahren zur Herstellung einer Ultraschallschweißverbindung mit einem Ultraschallschweißsystem gemäß einer Ausführungsform bereit, wobei das Verfahren Folgendes aufweist:
- Verwenden des Ultraschallschweißgeräts zum Herstellen einer Ultraschallschweißverbindung zwischen einer Gewebelasche und einem Produkt, wobei die Gewebelasche ein Gewebe mit Fäden aufweist, wobei die Fäden in einer Richtung eine Gewebe-Ortsfrequenz aufweisen, wobei das Produkt zumindest in einem die Ultraschallschweißverbindung aufweisenden Überlappungsbereich mit der Gewebelasche ein thermoplastisches Material aufweist, wobei die Ultraschallschweißverbindung in der Richtung hintereinander mit einer von der Gewebe-Ortsfrequenz verschiedenen Sonotroden-Ortsfrequenz angeordnete Schweißpunkte aufweist;
- Messen von Strukturdaten der Ultraschallschweißverbindung;
- Berechnen einer Frequenzverteilung der Strukturdaten; und
- Verwenden eines Wertes der Frequenzverteilung zum Bestimmen einer Qualitätskennzahl, wobei der Wert zumindest einen Wert der Frequenzverteilung bei der Sonotroden-Ortsfrequenz und / oder bei der Gewebe-Ortsfrequenz aufweist,
- in dem Fall, dass die Qualitätskennzahl außerhalb eines vorgegebenen Wertebereichs liegt, Steuern des Ultraschallschweißgeräts so, dass die Qualitätskennzahl einer zukünftig hergestellten Ultraschallschweißverbindung mit höherer Wahrscheinlichkeit in dem vorgegebenen Wertebereich liegt.

Das Verfahren zur Herstellung einer Ultraschallschweißverbindung stellt eine Regelung für den Ultraschallschweißvorgang bereit. Dies könnte den Vorteil haben, dass eine gleichbleibende Qualität von nacheinander hergestellten Ultraschallschweißverbindungen gewährleistet wird. Beispielsweise könnte durch das Verfahren eine kontinuierliche Überwachung der Qualitätskennzahl und / oder deren zeitlicher Entwicklung realisiert werden. Damit könnte ein beginnender Verschleiß der Sonotrodenanordnung durch die Abweichung der Qualitätskennzahl aus dem vorgegebenen Wertebereich frühzeitig erkannt werden.

In einem speziellen Beispiel wird in dem Qualitätsprüfungsverfahren eine durchschnittliche Tiefe der Schweißpunkte ermittelt, die in die Bestimmung der Qualitätskennzahl mit eingeht, wobei der vorgegebene Wertebereich so definiert ist, dass die Qualitätsprüfung nicht bestanden wird, wenn die einzelnen Schweißpunkte im Durchschnitt eine zu niedrige Tiefe aufweisen. Daraufhin könnte zum Beispiel eine Betriebsfrequenz und / oder -amplitude der Sonotrodenanordnung variiert werden, um im Rahmen der Resonanzcharakteristik der Sonotrodenanordnung die in die Ultraschallschweißverbindung eingekoppelte Gesamtenergie zu erhöhen, um die Tiefe der Schweißpunkte zu vergrößern.

In einem weiteren Beispiel ist die Sonotrodenanordnung aus mehreren individuell steuerbaren Einzelsonotroden zusammengesetzt. Aus den Strukturdaten könnte dann beispielsweise eine abweichende Einzelsonotrode lokalisiert werden. In Reaktion darauf könnte man die Steuerung für die erkannte abweichende Einzelsonotrode anpassen, um die Qualitätsanforderungen an die Gesamtanordnung wieder zu erfüllen. Aufgrund der genauen Lokalisierbarkeit der Abweichung könnte somit die Lebensdauer der Sonotrodenanordnung erhöht werden. Zudem könnte die Wirtschaftlichkeit des Ultraschallschweißgeräts erhöht werden, da beispielsweise nur die defekte Einzelsonotrode anstelle der Gesamtanordnung ausgetauscht werden müsste.

Das Regelverfahren könnte weiterhin eine Speicherung einer Vielzahl von Qualitätskennzahlen vorsehen, um beispielsweise einen laufenden Mittelwert etwa über die letzten 10 Qualitätskennzahlen zu bilden. Auf diese Weise könnte die Regelung gegenüber einzelnen Ausreißern desensibilisiert und somit die Signifikanz des Verfahrens erhöht werden.

In einem weiteren Aspekt stellt die Erfindung ein Dokument bereit, wobei das Dokument einen Dokumentenkörper und ein Buchelement aufweist, wobei der Dokumentenkörper zumindest in einem Überlappungsbereich mit einer Gewebelasche des Buchelements ein thermoplastisches Material aufweist, wobei die Gewebelasche und der Dokumentenkörper im Überlappungsbereich durch eine Ultraschallschweißverbindung miteinander verbunden sind, wobei die Gewebelasche ein Gewebe mit Fäden aufweist, wobei die Fäden in einer Richtung eine Gewebe-Ortsfrequenz aufweisen, wobei die Ultraschallschweißverbindung in der Richtung hintereinander mit einer Sonotroden-Ortsfrequenz angeordnete Schweißpunkte aufweist, wobei das Dokument zusätzlich einen integrierten elektronischen Schaltkreis mit einem nicht-flüchtigen Dokumentenspeicher aufweist, wobei in dem Dokumentenspeicher aus der Ultraschallschweißverbindung generierte Daten gespeichert sind, wobei die aus der Ultraschallschweißverbindung generierten Daten zumindest eines von gemessenen Strukturdaten der Ultraschallschweißverbindung, einer aus den Strukturdaten berechneten Frequenzverteilung und / oder einer aus der Frequenzverteilung bestimmten Qualitätskennzahl aufweisen.

Ein mit den genannten Daten ausgestattetes Dokument könnte eine erhöhte Fälschungssicherheit besitzen. In einem typischen Beispiel enthält der Dokumentenkörper ein gedrucktes Dokumentenpapier. Insbesondere, aber nicht ausschließlich, in dem Fall, dass das Dokumentenpapier in der Ultraschallschweißverbindung mit verschweißt wurde, müsste ein potenzieller Fälscher die Ultraschallschweißverbindung unauffällig lösen, um das Dokumentenpapier manipulieren oder austauschen zu können, und nachträglich wieder unauffällig zusammenfügen. Dieser Vorgang könnte jedoch die gemessene Struktur der Ultraschallschweißverbindung mit sehr hoher Wahrscheinlichkeit nicht wiederherstellen, die Struktur der Ultraschallschweißverbindung könnte also nicht reversibel lösbar sein. Somit wäre durch die Ultraschallschweißverbindung ein Individualisierungsmerkmal geschaffen, das einen nachträglichen Fälschungsnachweis ermöglichen oder erleichtern könnte.

Gemäß einer Ausführungsform weist der Dokumentenkörper zusätzlich eine Kommunikationsschnittstelle für ein Lesegerät auf, insbesondere eine drahtlose Kommunikationsschnittstelle, wie zum Beispiel eine RFID- und / oder NFC-Schnittstelle, wobei die Kommunikationsschnittstelle ein kryptographisches Protokoll aufweist, wobei zumindest die aus der Ultraschallschweißverbindung generierten Daten als Chiffrat in dem Dokumentenspeicher gespeichert sind, wobei das Chiffrat nur dann entschlüsselt werden kann, wenn zuvor das kryptographische Protokoll erfolgreich durchgeführt worden ist. Eine Verschlüsselung der gespeicherten Strukturdaten oder der daraus abgeleiteten Daten könnte ein unbefugtes Auslesen und / oder eine Umprogrammierung des Speichers mit gefälschten Daten erschweren.

Gemäß einer weiteren Ausführungsform ist in der Struktur der Schweißpunkte eine Information so codiert, dass die Information aus den gemessenen Strukturdaten decodiert werden kann. Dies könnte den Vorteil haben, dass die Ultraschallschweißverbindung zum Verbergen der Information genutzt werden kann. Auf diese Weise ließe sich zum Beispiel eine vorbestimmte Authentizitäts- und / oder Individualisierungsinformation in der Ultraschallschweißverbindung unterbringen, ohne dass die Präsenz dieser Information mit bloßem Auge bzw. ohne technische Hilfsmittel erkennbar wäre. Auch könnte die Codierung einer vorbestimmten Information in einer Ultraschallschweißverbindung die Fälschungssicherheit des Produkts erhöhen, da ein zum Codieren der Information angewendetes Ultraschallschweißverfahren eine hohe Präzision aufweisen müsste.

Die Information ist beispielsweise mithilfe einer Sonotrodenanordnung aus unabhängig steuerbaren Einzelsonotroden in die Ultraschallschweißverbindung codiert worden, sodass diese bei jedem Schweißpunkt beispielsweise ein individuelles Reflexions- oder Transmissionsvermögen oder Höhenniveau aufweist. In einem spezifischen Beispiel ist die Struktur jedes Schweißpunkts on-off-codiert, sodass man in der regelmäßigen Struktur der Schweißpunkte ein zweidimensionales optisches Muster wie beispielsweise einen QR-Code codieren könnte. Weitere Ausführungsformen implementieren eine mehrstufige Codierung je Schweißpunkt. Bei der Messung der Strukturdaten während des hierin beschriebenen Verfahrens zur Qualitätsprüfung einer Ultraschallschweißverbindung, beispielsweise im Rahmen einer Inline-Qualitätsprüfung während der Produktion des Dokuments oder einer Echtheitsprüfung nach dessen Veröffentlichung, werden die die vorbestimmte Information codierenden lokalen strukturellen Charakteristika der Ultraschallschweißverbindung in den Strukturdaten erfasst und stehen somit zur Decodierung der Information vor oder nach der Fourier-Transformation zur Verfügung.

In einem typischen Beispiel weist der Dokumentenkörper einen Laminatkörper in Kartenform auf. Allgemein kann es sich bei dem Dokument um ein Wert- oder Sicherheitsdokument handeln, insbesondere ein Ausweisdokument oder ID-Dokument, insbesondere einen elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum.

Im Weiteren werden Ausführungsformen der Erfindung mit Bezugnahme auf die Zeichnungen erläutert. In diesen zeigen:
- Figur 1: einen schematischen Querschnitt durch ein Produkt und eine Gewebelasche, die durch eine Ultraschallschweißverbindung miteinander verbunden sind,
- Figur 2: einen schematischen Aufbau zum Messen von Strukturdaten einer Ultraschallschweißverbindung,
- Figuren 3A bis 3C: jeweils ein gemessenes Transmissionsbild eines ultraschallgeschweißten Überlappungsbereiches zwischen einer Gewebelasche und einem Produkt,
- Figuren 4A bis 4C: jeweils ein gemessenes Höhenprofil eines ultraschallgeschweißten Überlappungsbereiches zwischen einer Gewebelasche und einem Produkt,
- Figuren 5A bis 5C: jeweils ein Diagramm einer Frequenzverteilung eines Höhenprofils eines ultraschallgeschweißten Überlappungsbereiches zwischen einer Gewebelasche und einem Produkt, und
- Figuren 6A bis 6C: jeweils eine zweidimensionale Frequenzverteilung eines ultraschallgeschweißten Überlappungsbereiches zwischen einer Gewebelasche und einem Produkt.

Einander ähnliche Elemente werden im Folgenden mit denselben Bezugszeichen gekennzeichnet.

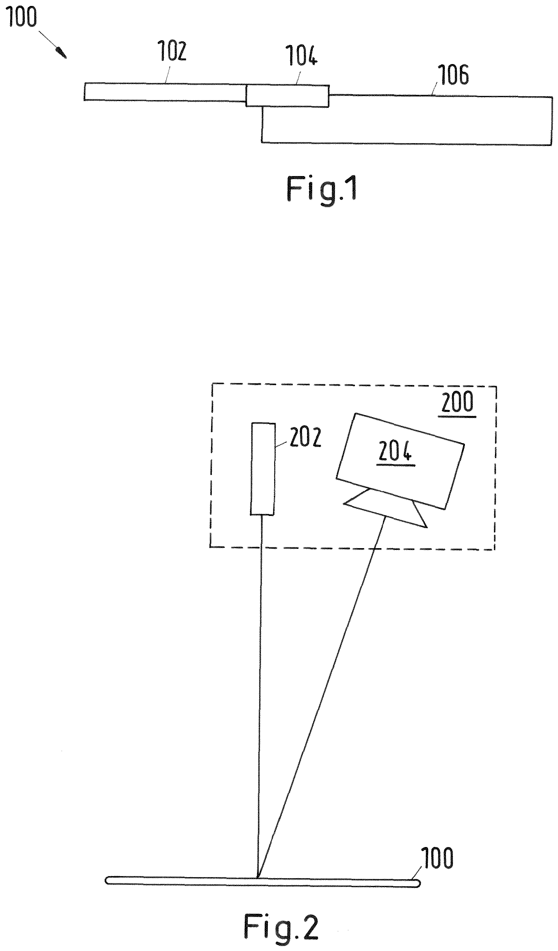

Figur 1 zeigt ein Diagramm mit einem schematischen Querschnitt eines Produkts 106, an das eine Gewebelasche 102 mit einer Ultraschallschweißverbindung 104 angeschweißt ist. Aufgrund der Ultraschallschweißverbindung 104 bilden die vor dem Verschweißen als Einzelteile gegebenen Teile Produkt 106 und Gewebelasche 102 ein zusammenhängendes Verschweißungsprodukt 100. Die Gewebelasche 102 besteht aus mindestens einer Gewebelage von miteinander verwobenen Fäden. Die Fäden können aus einem Material beschaffen sein, das den Energieeintrag während des Ultraschallschweißens widersteht, das heißt aufgrund des Schweißvorgangs keine Veränderungen beispielsweise der physikalischen Phase, der Form, Farbe usw. erfährt. Alternativ können die Fäden der Gewebelasche 102 jedoch auch ein Material aufweisen, das sich während des Schweißvorgangs verändert.

In einem Beispiel bestehen die Fäden aus einem thermoplastischen Material, insbesondere demselben thermoplastischen Material, welches das Produkt 106 im Überlappungsbereich 104 mit der Gewebelasche 102 aufweist, oder es handelt sich um nichtthermoplastische Fäden, die von einem thermoplastischen Material umhüllt sind. Das Ultraschallschweißen würde dann die thermoplastischen Materialien der Gewebelasche 102 und des Produkts 106 im Überlappungsbereich 104 gleichzeitig schmelzen, sodass die Gewebelasche 102 und das Produkt 106 eine stoffschlüssige Verbindung eingehen, falls die beiden thermoplastischen Materialien mischbar sind. Im Fall einer inerten Gewebelasche 102 hingegen bildet sich im Überlappungsbereich 104 eine stoffschlüssige Verbindung zwischen den Fäden der Gewebelasche 102 und dem ausgehärteten Material des Produkts 106, falls die eingebrachte akustische Energie zum vollständigen Aufschmelzen des thermoplastischen Materials ausreicht.

Das Produkt 106 ist ein fester Gegenstand, der zumindest in dem Überlappungsbereich 104 ein thermoplastisches Material aufweist, in das die Gewebelasche 102 durch Ultraschallschweißen eingebracht werden kann. Der Überlappungsbereich 104 erstreckt sich vorzugsweise so weit in die Tiefe des Produkts 106 hinein, dass die gesamte Dicke der Gewebelasche 102 während des Schweißens in dem thermoplastischen Material aufgenommen werden kann, d. h. die Gewebelasche 102 sollte durch das thermoplastische Material während und nach dem Schweißvorgang vollständig benetzt werden können und nach dem Schweißvorgang nicht über die Umgebung des Überlappungsbereichs 104 überstehen. In einem Beispiel handelt es sich bei dem Schweißprodukt 100 um ein buchförmiges Wert- oder Sicherheitsdokument, wobei die Ultraschallschweißverbindung die Gewebelasche 102 eines Buchelements mit einem Dokumentenkörper wie beispielsweise einem Laminatkörper aus bedrucktem Papier und Polycarbonatfolien herstellt.

Figur 2 zeigt einen schematischen Messaufbau zum Messen der Strukturdaten der Ultraschallschweißverbindung durch Triangulation. In dem gezeigten Beispiel wird eine Oberfläche des Schweißprodukts 100 mit hoher Genauigkeit mithilfe einer optischen Triangulations-Messeinheit 200 gemessen. Das Messmodul 200 enthält eine Laservorrichtung 202, die zum Scannen der Oberfläche des Schweißprodukts 100 ausgebildet ist. Die Messeinheit 200 enthält ferner eine Kamera 204, die das von der Oberfläche des Schweißprodukts 100 zurückgestreute Laserlicht registrieren kann.

Durch Scannen oder Abrastern der Oberfläche erhält die Kamera 204 somit ein Bild, aus dem das Höhenprofil des beleuchteten Oberflächenbereichs des Schweißproduktes 100 bestimmt werden kann. Die Laservorrichtung 202 arbeitet vorzugsweise mit einem Laser, der Laserlicht im visuellen Bereich des elektromagnetischen Spektrums erzeugt, da in diesem Spektralbereich Laser mit besonders niedrigen Investitionskosten verfügbar sind und die entsprechenden Wellenlängen eine Vermessung der Oberfläche mit hoher Auflösung im Submillimeterbereich sowie einer Höhengenauigkeit im Mikrometerbereich erlauben. Bei der Kamera 204 kann es sich beispielsweise um eine Digitalkamera in CMOS- oder CCD-Technologie oder auch einen optischen Positionssensor (OPS) handeln. Vorzugsweise arbeitet die Kamera 204 mit einem zweidimensionalen Bildsensor.

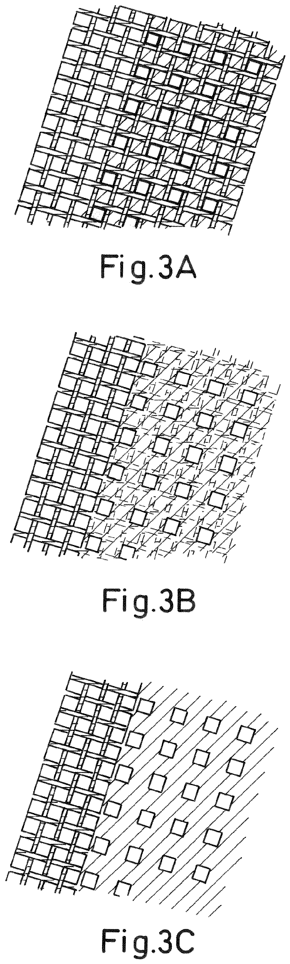

Die Figuren 3A - 3C verdeutlichen die Dynamik eines Ultraschallschweißvorgangs am Beispiel einer Gewebelasche 102, die mit einer Polycarbonatkarte verschweißt werden soll. Dargestellt ist jeweils ein Röntgentransmissionsbild des Überlappungsbereichs 104, in dem die Gewebelasche 102 mit der Polycarbonatkarte als Produkt 106 verschweißt wurde. Die Figuren 3A - 3C unterscheiden sich in der Schweißdauer, während der die Ultraschallwelle mittels einer Sonotrode in das Polycarbonat eingekoppelt wurde. Im linken Bildbereich erkennt man jeweils die Fäden der Gewebelasche 102 als geradlinige Verdunkelungsbereiche bzw. die von den Fäden umschlossenen Maschen als hellgraue Quadrate. Von der Bildmitte nach rechts wird das Gewebemuster von einer regelmäßigen Anordnung größerer, heller Quadrate überlagert, die von Bereichen mit erhöhter Verdunkelung umgeben sind.

Die hellen Quadrate sind in Kett- und Schussrichtung auf einem regelmäßigen, quadratischen Raster angeordnet. Sie sind etwas größer als die Maschen des Gewebemusters und sind durch etwa die 1,5-fache Maschenbreite der Gewebelasche 102 voneinander beabstandet. Jedes der größeren Quadrate des Überlagerungsmusters entspricht einem Schweißkontakt der zum Ultraschallschweißen verwendeten Sonotrodenanordnung, d. h. einem aus einer Vielzahl von in diesem Muster angeordneten Schweißkontakten einer einzelnen Sonotrode oder dem jeweiligen Schweißkontakt einer Sonotrode aus einem Array von in diesem Muster angeordneten Sonotroden mit jeweils einem einzelnen Schweißkontakt. Die drei Transmissionsbilder der Figuren 3A - 3C wurden in verschiedenen Proben mit einem Röntgenscanner bei 60 kV, 200 µA mit 8 Integrationen über 1000 ms gemessen.

Das Röntgenbild in Figur 3A zeigt die Ultraschallschweißverbindung einer Probe mit einer Schweißdauer von 0,9 Sekunden. Diese Schweißdauer liegt deutlich unterhalb der zum Herstellen einer festen Ultraschallschweißverbindung nötigen Dauer von mindestens ca. 1,8 Sekunden. Auf dem Bild ist das regelmäßige Muster der dunklen Gewebefäden in den breiten Lücken zwischen den hellen Schweißpunkten deutlich erkennbar. Die Ultraschallschweißverbindung des in Figur 3B gezeigten Musters wurde über eine Dauer von 1,5 Sekunden geschweißt. Das regelmäßige, rechtwinklige Muster der Kontaktstellen der quadratischen Sonotroden-Schweißkontakte ist hier deutlich zu erkennen. Die Zwischenräume zwischen den hellen Quadraten sind vollständig in Grautönen aufgefüllt, jedoch ist das Muster der Gewebelasche 102 noch als schwache Struktur der Grautöne in den Lücken zu erkennen. Es handelt sich also um eine weitere nicht verfestigte Ultraschallschweißverbindung, bei der ein Anteil der Gewebestruktur an der Gesamtstruktur der Ultraschallschweißverbindung noch zu erkennen ist.

Bei dem in Figur 3C gezeigten Muster betrug die Schweißdauer 2,0 Sekunden, d. h. es handelt sich um eine feste Ultraschallschweißverbindung. Die weißen Kontaktpunkte erscheinen nun mit einem größeren Kontrast gegenüber den in einem gleichmäßigen Grau erkennbaren Lücken. Das Gewebe ist nun vollständig von Polycarbonat umschlossen und das Gewebemuster ist in den Lücken zwischen den Kontaktpunkten nicht mehr nachweisbar. Der Vergleich von Figur 3A bis 3C belegt, dass die Zunahme von Strukturelementen des Bildes mit der Sonotroden-Ortsfrequenz der Kontaktpunkte, die Abnahme von Strukturelementen mit der Gewebe-Ortsfrequenz der Gewebefäden und/oder die Differenz der Intensität bei der Sonotroden- und der Gewebe-Ortsfrequenz geeignete messbare Größen zur Beurteilung der Festigkeit der Ultraschallschweißverbindung sind.

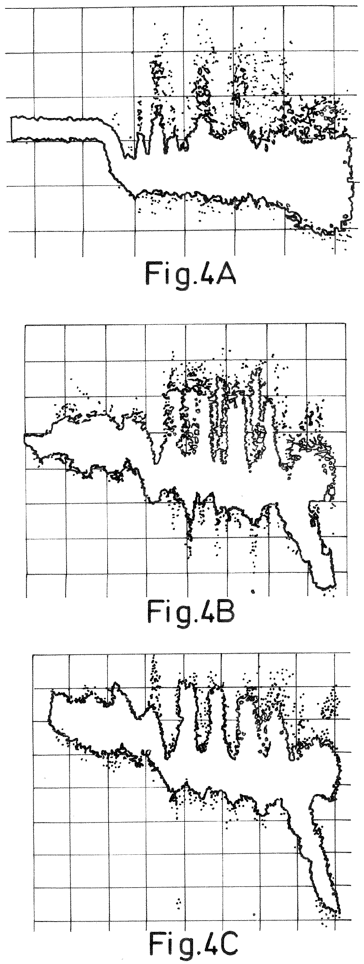

Die Figuren 4A - 4C zeigen jeweils ein mittels optischer Triangulation gemessenes Strukturprofil jeweils einer der in der Diskussion der Figuren 3A - 3C genannten Ultraschallschweißverbindungsmuster mit 0,9 Sekunden (Figur 4A), 1,5 Sekunden (Figur 4B) bzw. 2,0 Sekunden Schweißdauer (Figur 4C). Gezeigt ist jeweils die Höhe (Y-Achse) der Streuquelle für jeden gemessenen Laserpuls entlang einer geraden Messstrecke in Kett- oder Schussrichtung des Gewebes, auf der sowohl die Messstrecke kreuzende Gewebefäden als auch Sonotroden-Schweißkontaktstellen vorhanden sind. Jedes der Diagramme zeigt eine Überlagerung von Messdaten aus einer Vielzahl von parallelen Zeilenscans. Dabei gibt die X-Achse die Position auf der Messstrecke wieder. In den Diagrammen ist jeweils links das Signal auf einem Bereich zu sehen, in dem sich nur die Polycarbonatkarte befindet. Die Karte endet auf der rechten Seite der Diagramme, wo sich vor allem in den Figuren 4B und 4C das Signal in einem Ast mit Streuung vom Rand der Polycarbonatkarte und einem weiteren Ast der infolge des Schweißvorgangs nach unten abknickenden Gewebelasche 102 aufteilt. In der Mitte befindet sich jeweils der Überlappungsbereich 104 zwischen der Polycarbonatkarte des Musters und der Gewebelasche 102.

In Figur 4A (Muster mit 0,9 Sekunden Schweißdauer) zeigt der Überlappungsbereich 104 zahlreiche eng zusammenstehende Höhenausschläge der Gewebefäden, die mit vier breiteren, stark verrauschten Signalen der Kontaktpunkte mit einem größeren Abstand überlagert sind. In Figur 4B ist eine verstärkte Häufung von Signalen an den Schweißkontaktpunkten zu beobachten, diese sind jedoch nicht sauber voneinander getrennt. Dies ist jedoch bei dem Zeilenscan in Figur 4C der Fall, der in Figur 3C zu beobachtende deutliche Kontrast zwischen den Schweißpunkten und ihren Zwischenräumen ist auch hier ausgeprägt. Die enger zusammenstehenden Häufungssignale der Figur 4A sind in Figur 4C nicht mehr zu erkennen. Somit ist auch in den Triangulationsdaten der beschriebene Übergang von Struktursignalen mit der Gewebe-Ortsfrequenz zu der fest verschweißten Struktur mit der Sonotroden-Ortsfrequenz zu erkennen.

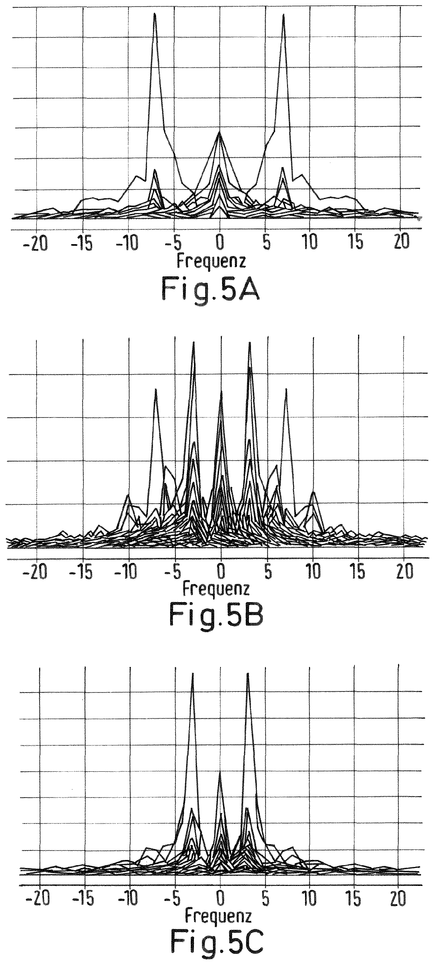

Die Figuren 5A bis 5C zeigen jeweils ein Diagramm mit einem Satz von Zeilen-Frequenzverteilungen, von denen jede aus einem Zeilenscan aus dem Satz paralleler Triangulations-Zeilenscans der Figuren 4A - 4C berechnet wurde. Dabei entsprechen die Figuren 5A bis 5C wieder jeweils der Probe mit 0,9 Sekunden, 1,5 Sekunden bzw. 2,0 Sekunden Schweißdauer. Die Frequenz (X-Achse) und Amplitude (Y-Achse) der Strukturdaten sind jeweils in beliebigen Einheiten angegeben.

Abgesehen von einigen nicht periodischen Strukturelementen (Ausschlag bei Frequenz 0) zeigt Figur 5A bei manchen Zeilen einen Ausschlag bei 7 Frequenzeinheiten. In einem der Zeilenscans ist das Signal bei dieser Frequenz etwa viermal so stark wie in anderen Zeilenscans mit einem Ausschlag bei 7 Frequenzeinheiten. Bei Frequenzen zwischen 0 und 7 Frequenzeinheiten ist kein signifikanter Ausschlag erkennbar. Es handelt sich folglich bei der Frequenz 7 um die Gewebe-Ortsfrequenz.

Das Frequenzdiagramm in Figur 5B unterscheidet sich deutlich hiervon: Es sind mehrere Zeilenscans mit einer starken Spektrallinie bei 4 Frequenzeinheiten erkennbar, während manche Zeilenscans einen zum Teil zu niedrigeren Frequenzen hin verschmierten Ausschlag bei der Gewebe-Ortsfrequenz aufweisen. Insgesamt ist ein verstärktes Rauschen im Bereich von 0 bis 10 Frequenzeinheiten zu erkennen. Das schwache Durchscheinen der Gewebestruktur in der Probe mit 1,5 Sekunden Schweißdauer ist also entsprechend in der Frequenzverteilung erkennbar.

In Figur 5C sind die Spektrallinien bei der Gewebe-Ortsfrequenz bis auf wenige Ausnahmen mit einem Signal-zu-Rauschverhältnis von maximal 3 verschwunden. Fast alle Zeilenscans zeigen hingegen einen Ausschlag bei der Sonotroden-Ortsfrequenz von ca. 3 Frequenzeinheiten, wobei die stärksten Spektrallinien ein Signal-zu-Rauschverhältnis von ca. 15 aufweisen. Der Vergleich der Figuren 5A - 5C zeigt, dass die Abnahme der Amplitude bei der Gewebe-Ortsfrequenz, die Zunahme der Amplitude bei der Sonotroden-Ortsfrequenz, die Differenz und/oder das Verhältnis der Amplituden bei beiden Frequenzen und/oder die spektrale Rauschbreite der Frequenzverteilungen geeignete Größen zur Bestimmung der Festigkeit der Ultraschallschweißverbindung sind. Vorzugsweise kann zur Analyse eine Auswahl aus der berechneten Schar von Frequenzverteilungen getroffen werden, beispielsweise durch Identifikation derjenigen Frequenzverteilung, bei der die Spektrallinie bei der Sonotroden-Ortsfrequenz oder deren Differenz oder Verhältnis zum Signal bei der Gewebe-Ortsfrequenz im Vergleich zu den Frequenzverteilungen der anderen Zeilenscans am größten ist. Alternativ können die Werte der einzelnen Zeilen-Frequenzverteilungen bei jeder Stützfrequenz aufsummiert werden, um die Strukturdaten auf der gesamten mit den parallelen Zeilenscans abgedeckten Breite analysieren zu können. Die genannten Möglichkeiten zur Analyse der Zeilenfrequenzverteilungen können natürlich auch analog mit einer Auswahl von Zeilen eines Bildes ausgeführt werden, welches die Strukturdaten der Ultraschallschweißverbindung enthält.

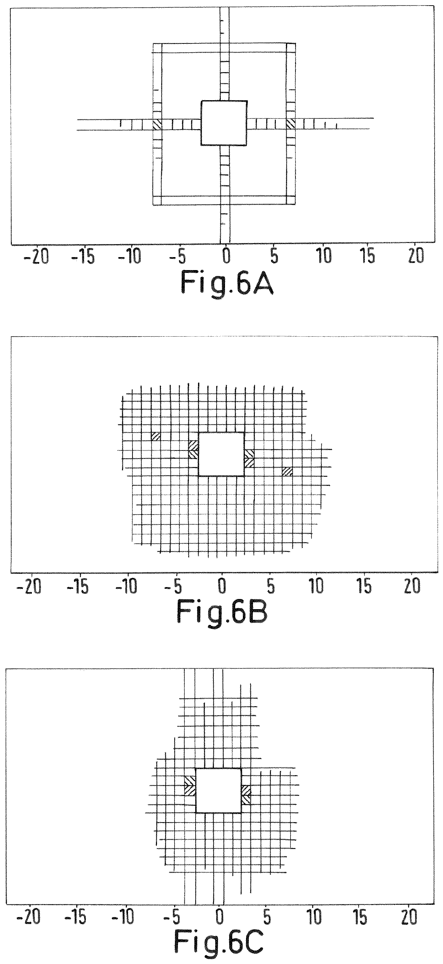

Die Figuren 6A bis 6C zeigen jeweils ein zweidimensionales Histogramm, das die Frequenzverteilung der aus den parallelen Zeilenscans der Ultraschallschweißverbindung jeweils eines der vorstehend diskutierten Muster in Richtung der Zeilenscans (X-Achse) sowie senkrecht dazu (Y-Achse) darstellt. Dabei zeigen Figur 6A - 6C wieder jeweils die 2D-Frequenzverteilung des Musters mit 0,9 Sekunden, 1,5 Sekunden bzw. 2,0 Sekunden Schweißdauer. In den 2D-Diagrammen sind die Amplituden auf einer Grauzonenskala zwischen schwarz (0) und weiß (Maximum des Messbereichs) dargestellt. Zur besseren Übersicht wurden die Intensitäten im Bereich von 0 bis 2 Frequenzeinheiten ausgeblendet.

Figur 6A zeigt einen starken Ausschlag bei der Gewebe-Ortsfrequenz auf der X-Achse sowie einen erhöhten Rauschpegel auf der Y-Achse. Zur Diagonalen hin sind praktisch keine Signale zu erkennen. Figur 6B zeigt einen starken Ausschlag bei der Sonotroden-Ortsfrequenz im Bereich von 0 bis 1 Frequenzeinheiten auf der Y-Achse sowie einen kleineren Ausschlag bei der Gewebe-Ortsfrequenz bei 2 Frequenzeinheiten auf der Y-Achse. Der Rauschpegel ist in einem Radius von etwa 10 Frequenzeinheiten um den Ursprung deutlich erhöht. In Figur 6C ist nur noch ein Ausschlag bei der Sonotroden-Ortsfrequenz mit einer leichten Verschiebung zur Frequenzeinheit auf der Y-Achse zu erkennen. Der Rauschpegel ist wieder fast vollständig auf das Niveau von Figur 6A abgefallen.

Im Vergleich zeigen die Figuren 6A bis 6C keine nennenswerte Korrelation der Frequenzverteilungen in den beiden Richtungen. Dies zeigt, dass zweidimensionale Frequenzverteilungen ein nützliches Mittel sein können, um die Analyse der Ultraschallschweißverbindung auch dann zuverlässig durchführen zu können, falls die Strukturdaten, zum Beispiel aus messtechnischen Gründen, nur in einer der beiden Richtungen eine deutlich ausgeprägte Periodizität aufweisen. Zudem wird erkennbar, dass das Rauschen zusätzlich als ein Maß zur Beurteilung der Festigkeit der Ultraschallschweißverbindung herangezogen werden kann. Beispielsweise ist die Amplitude auf der Hauptdiagonalen in Figur 6B im Vergleich zu den Figuren 6A und 6C erhöht.

Somit könnte eine zuverlässigere Beurteilung der Festigkeit der Ultraschallschweißverbindung beispielsweise dadurch erfolgen, dass die Amplitude am Punkt (5|5) gemeinsam mit den Amplituden bei der Gewebe-Ortsfrequenz und der Sonotroden-Ortsfrequenz auf den beiden Hauptachsen bestimmt wird. Dann könnte ein hinreichendes Kriterium für die Festigkeit der Ultraschallschweißverbindung sein, dass die Amplitude am Rauschpunkt (5|5) nicht signifikant über dem Rauschen liegt und die Amplitude bei einer der Sonotroden-Ortsfrequenzen einen festgelegten Schwellenwert überschreitet.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

### Bezugszeichenliste

- 100: Schweißprodukt
- 102: Gewebelasche
- 104: Überlappungsbereich
- 106: Produkt
- 200: Messeinheit
- 202: Laser
- 204: Kamera

## Patentansprüche

1. Qualitätsprüfungsverfahren für eine Ultraschallschweißverbindung zwischen einer Gewebelasche (102) und einem Produkt (106), wobei die Gewebelasche (102) ein Gewebe mit Fäden aufweist, wobei die Fäden in einer Richtung eine Gewebe-Ortsfrequenz aufweisen, wobei das Produkt (106) zumindest in einem die Ultraschallschweißverbindung aufweisenden Überlappungsbereich (104) mit der Gewebelasche (102) ein thermoplastisches Material aufweist, wobei die Ultraschallschweißverbindung in der Richtung hintereinander mit einer von der Gewebe-Ortsfrequenz verschiedenen Sonotroden-Ortsfrequenz angeordnete Schweißpunkte aufweist, wobei das Verfahren umfasst:
- Messen von Strukturdaten der Ultraschallschweißverbindung;
- Berechnen einer Frequenzverteilung der Strukturdaten; und
- Verwenden eines Wertes der Frequenzverteilung zum Bestimmen einer Qualitätskennzahl, wobei der Wert zumindest einen Wert der Frequenzverteilung bei der Sonotroden-Ortsfrequenz und / oder bei der Gewebe-Ortsfrequenz aufweist,
wobei die Qualitätsprüfung bestanden ist, wenn die Qualitätskennzahl in einem vorgegebenen Wertebereich liegt.

2. Verfahren nach Anspruch 1, wobei das Messen der Strukturdaten einen Zeilenscan in der Richtung umfasst, wobei sich der von dem Zeilenscan erfasste Bereich der Ultraschallschweißverbindung über eine Vielzahl der Fäden und eine Vielzahl der Schweißpunkte erstreckt.

3. Verfahren nach einem der vorigen Ansprüche, wobei die Qualitätskennzahl proportional zum Verhältnis des Wertes der Frequenzverteilung bei der Sonotroden-Ortsfrequenz zum Wert der Frequenzverteilung bei der Gewebe-Ortsfrequenz ist, wobei der vorgegebene Wertebereich so definiert ist, dass die Qualitätsprüfung bestanden ist, wenn das Verhältnis größer oder gleich 3 ist, bevorzugt größer oder gleich 5, besonders bevorzugt größer oder gleich 10.

4. Verfahren nach einem der vorigen Ansprüche, wobei der zum Bestimmen der Qualitätskennzahl verwendete Wert die Summe eines lokalen Maximums der Frequenzverteilung bei der Sonotroden-Ortsfrequenz sowie benachbarter Werte der Frequenzverteilung in einem vordefinierten Frequenzbereich um die Sonotroden-Ortsfrequenz und / oder die Summe eines lokalen Maximums der Frequenzverteilung bei der Gewebe-Ortsfrequenz sowie benachbarter Werte der Frequenzverteilung in einem vordefinierten Frequenzbereich um die Gewebe-Ortsfrequenz aufweist.

5. Verfahren nach einem der vorigen Ansprüche, wobei das Messen der Strukturdaten durch Reflexion und / oder Streuung elektromagnetischer Wellen erfolgt, bevorzugt durch elektromagnetische Wellen im sichtbaren Bereich.

6. Verfahren nach einem der vorigen Ansprüche, wobei das Messen der Strukturdaten durch Triangulation erfolgt.

7. Verfahren nach einem der Ansprüche 1 - 5, wobei das Messen der Strukturdaten durch Transmission elektromagnetischer Wellen erfolgt, bevorzugt durch elektromagnetische Wellen im Infrarot-, Terahertz- und / oder Röntgenbereich.

8. Verfahren nach einem der vorigen Ansprüche, wobei das Verfahren zusätzlich ein Erfassen eines Großbildes mit einer ersten Auflösung umfasst, wobei das Großbild vorläufige Strukturdaten zumindest der Ultraschallschweißverbindung umfasst, wobei das Verfahren zusätzlich ein Erkennen eines bevorzugten Bildbereichs des Großbildes umfasst, wobei der bevorzugte Bildbereich die vorläufigen Strukturdaten der Ultraschallschweißverbindung umfasst, wobei das Messen der Strukturdaten durch Erfassen eines Detailbildes mit einer zweiten Auflösung in dem bevorzugten Bildbereich erfolgt, wobei die zweite Auflösung größer als die erste Auflösung ist.

9. Verfahren nach einem der vorigen Ansprüche, wobei das Messen der Strukturdaten in zwei Dimensionen erfolgt, wobei das Berechnen der Frequenzverteilung in den zwei Dimensionen erfolgt, wobei zur Bestimmung der Qualitätskennzahl Werte der Frequenzverteilung in den zwei Dimensionen verwendet werden.

10. Verfahren nach einem der vorigen Ansprüche, wobei das Produkt (106) einen integrierten elektronischen Schaltkreis mit einem nicht-flüchtigen Speicher aufweist, wobei das Verfahren zusätzlich ein Schreiben zumindest eines Teils der Strukturdaten, zumindest eines Teils der Frequenzverteilung und / oder der Qualitätskennzahl in den Speicher umfasst.

11. Verfahren nach einem der vorigen Ansprüche, wobei in der Struktur der Schweißpunkte eine Information codiert ist, wobei das Verfahren zusätzlich ein Decodieren der Information aus den Strukturdaten aufweist, wobei die Qualitätsprüfung bestanden ist, wenn die decodierte Information mit einer vorbestimmten codierten Information übereinstimmt.

12. Vorrichtung zur Qualitätsprüfung, wobei die Vorrichtung eine Messeinheit (200) sowie eine Rechnereinheit aufweist, wobei die Rechnereinheit in kommunikativer Verbindung mit der Messeinheit (200) steht, wobei die Rechnereinheit einen Prozessor sowie einen Speicher aufweist, wobei in dem Speicher Programmbefehle gespeichert sind, wobei die Programmbefehle bei Ausführung durch den Prozessor bewirken, dass die Rechnereinheit Folgendes leistet:
- Steuern der Messeinheit (200) zum Messen von Strukturdaten einer Ultraschallschweißverbindung zwischen einer Gewebelasche (102) und einem Produkt (106), wobei die Strukturdaten eine Gewebe-Ortsfrequenz umfassen, wobei die Gewebe-Ortsfrequenz Fäden eines Gewebes der Gewebelasche (102) in einer Richtung beschreibt, wobei die Strukturdaten die Schweißpunkte der Ultraschallschweißverbindung in der Richtung hintereinander mit einer von der Gewebe-Ortsfrequenz verschiedenen Sonotroden-Ortsfrequenz beschreiben,
- Berechnen einer Frequenzverteilung der Strukturdaten;
- Verwenden eines Wertes der Frequenzverteilung zum Bestimmen einer Qualitätskennzahl, wobei der Wert zumindest einen Wert der Frequenzverteilung bei der Sonotroden-Ortsfrequenz und / oder bei der Gewebe-Ortsfrequenz aufweist; und
- Beurteilen der Qualitätsprüfung als bestanden, wenn die Qualitätskennzahl in einem vorgegebenen Wertebereich liegt.

13. Ultraschallschweißsystem, aufweisend:
- ein Ultraschallschweißgerät zum Herstellen einer Ultraschallschweißverbindung zwischen einer Gewebelasche (102) und einem Produkt (106), wobei die Gewebelasche (102) ein Gewebe mit Fäden aufweist, wobei die Fäden in einer Richtung eine Gewebe-Ortsfrequenz aufweisen, wobei das Produkt (106) zumindest in einem für die Ultraschallschweißverbindung vorgesehenen Überlappungsbereich (104) mit der Gewebelasche (102) ein thermoplastisches Material aufweist, wobei das Ultraschallschweißgerät eine Sonotrodenanordnung aufweist, wobei die Sonotrodenanordnung in der Richtung hintereinander mit einer von der Gewebe-Ortsfrequenz verschiedenen Sonotroden-Ortsfrequenz angeordnete Schweißkontakte aufweist; und
- die Vorrichtung zur Qualitätsprüfung nach Anspruch 12.

14. Verfahren zur Herstellung einer Ultraschallschweißverbindung mit einem Ultraschallschweißsystem, wobei das Verfahren umfasst:
- Herstellen einer Ultraschallschweißverbindung zwischen einer Gewebelasche (102) und einem Produkt (106), wobei die Gewebelasche (102) ein Gewebe mit Fäden aufweist, wobei die Fäden in einer Richtung eine Gewebe-Ortsfrequenz aufweisen, wobei das Produkt (106) zumindest in einem die Ultraschallschweißverbindung aufweisenden Überlappungsbereich (104) mit der Gewebelasche (102) ein thermoplastisches Material aufweist, wobei die Ultraschallschweißverbindung in der Richtung hintereinander mit einer von der Gewebe-Ortsfrequenz verschiedenen Sonotroden-Ortsfrequenz angeordnete Schweißpunkte aufweist;
- Messen von Strukturdaten der Ultraschallschweißverbindung;
- Berechnen einer Frequenzverteilung der Strukturdaten; und
- Verwenden eines Wertes der Frequenzverteilung zum Bestimmen einer Qualitätskennzahl, wobei der Wert zumindest einen Wert der Frequenzverteilung bei der Sonotroden-Ortsfrequenz und / oder bei der Gewebe-Ortsfrequenz aufweist,
- in dem Fall, dass die Qualitätskennzahl außerhalb eines vorgegebenen Wertebereichs liegt, Steuern des Ultraschallschweißgeräts so, dass die Qualitätskennzahl einer zukünftig hergestellten Ultraschallschweißverbindung mit höherer Wahrscheinlichkeit in dem vorgegebenen Wertebereich liegt.

15. Dokument, aufweisend einen Dokumentenkörper und ein Buchelement, wobei der Dokumentenkörper zumindest in einem Überlappungsbereich (104) mit einer Gewebelasche (102) des Buchelements ein thermoplastisches Material aufweist, wobei die Gewebelasche (102) und der Dokumentenkörper im Überlappungsbereich (104) durch eine Ultraschallschweißverbindung miteinander verbunden sind, wobei die Gewebelasche (102) ein Gewebe mit Fäden aufweist, wobei die Fäden in einer Richtung eine Gewebe-Ortsfrequenz aufweisen, wobei die Ultraschallschweißverbindung in der Richtung hintereinander mit einer Sonotroden-Ortsfrequenz angeordnete Schweißpunkte aufweist, wobei das Dokument zusätzlich einen integrierten elektronischen Schaltkreis mit einem nicht-flüchtigen Dokumentenspeicher aufweist, wobei in dem Dokumentenspeicher aus der Ultraschallschweißverbindung generierte Daten gespeichert sind, wobei die aus der Ultraschallschweißverbindung generierten Daten zumindest eines von gemessenen Strukturdaten der Ultraschallschweißverbindung, einer aus den Strukturdaten berechneten Frequenzverteilung und / oder einer aus der Frequenzverteilung bestimmten Qualitätskennzahl aufweisen.

## Claims

1. A method for checking the quality of an ultrasonic welded connection between a fabric tab (102) and a product (106), wherein the fabric tab (102) includes a fabric with yarns, wherein the yarns have a fabric spatial frequency in a direction, wherein the product (106) comprises a thermoplastic material at least in one region of overlap (104) with the fabric tab (102), said region of overlap including the ultrasonic welded connection, wherein the ultrasonic welded connection includes weld points arranged in succession in the direction with a sonotrode spatial frequency different from the fabric spatial frequency, wherein the method includes the steps of:
- measuring structural data of the ultrasonic welded connection;
- calculating a frequency distribution of the structural data; and
- using a value of the frequency distribution to determine a quality characteristic, wherein the value includes at least one value of the frequency distribution in the case of the sonotrode spatial frequency and/or in the case of the fabric spatial frequency,
wherein the quality check is passed if the quality characteristic lies within a specified value range.

2. The method according to claim 1, wherein the measuring of the structural data comprises a line scan in the direction, wherein the region of the ultrasonic welded connection detected by the line scan extends over multiple yarns and multiple weld points.

3. The method according to one of the preceding claims, wherein the quality characteristic is proportional to the ratio of the value of the frequency distribution in the case of the sonotrode spatial frequency to the value of the frequency distribution in the case of the fabric spatial frequency, wherein the specified value range is defined such that the quality check is passed if the ratio is greater than or equal to 3, preferably greater than or equal to 5, particularly preferably greater than or equal to 10.

4. The method according to one of the preceding claims, wherein the value used to determine the quality characteristic includes the sum of a local maximum of the frequency distribution in the case of the sonotrode spatial frequency as well as adjacent values of the frequency distribution in a predefined frequency range around the sonotrode spatial frequency and/or the sum of a local maximum of the frequency distribution in the case of the fabric spatial frequency as well as adjacent values of the frequency distribution in a predefined frequency range around the fabric spatial frequency.

5. The method according to one of the preceding claims, wherein the structural data are measured by reflection and/or scattering of electromagnetic waves, preferably by electromagnetic waves in the visible range.

6. The method according to one of the preceding claims, wherein the structural data are measured by triangulation.

7. The method according to one of claims 1 - 5, wherein the structural data are measured by transmission of electromagnetic waves, preferably by electromagnetic waves in the infrared, terahertz and/or X-ray range.

8. The method according to one of the preceding claims, wherein the method additionally comprises a detection of a rough image with a first resolution, wherein the rough image comprises preliminary structural data at least of the ultrasonic welded connection, wherein the method additionally comprises a recognition of a preferred image region of the rough image, wherein the preferred image region comprises the preliminary structural data of the ultrasonic welded connection, wherein the structural data are measured by detecting a detailed image with a second resolution in the preferred image region, wherein the second resolution is greater than the first resolution.

9. The method according to one of the preceding claims, wherein the structural data are measured in two dimensions, wherein the frequency distribution in the two dimensions is calculated, wherein values of the frequency distribution in the two dimensions are used to determine the quality characteristic.

10. The method according to one of the preceding claims, wherein the product (106) includes an integrated electronic circuit with a non-volatile memory, wherein the method additionally comprises a writing of at least part of the structural data, at least part of the frequency distribution and/or the quality characteristic into the memory.

11. The method according to one of the preceding claims, wherein information is encoded in the structure of the weld points, wherein the method additionally includes a decoding of the information from the structural data, wherein the quality check is passed if the decoded information matches predetermined encoded information.

12. A device for checking quality, wherein the device includes a measuring unit (200) and a computing unit, wherein the computing unit is communicatively coupled to the measuring unit (200), wherein the computing unit includes a processor and a memory, wherein program commands are stored in the memory, wherein the program commands, when executed by the processor, cause the computing unit to do the following:
- control the measuring unit (200) to measure structural data of an ultrasonic welded connection between a fabric tab (102) and a product (106), wherein the structural data comprise a fabric spatial frequency, wherein the fabric spatial frequency describes yarns of a fabric of the fabric tab (102) in a direction, wherein the structural data describe the weld points of the ultrasonic welded connection in succession in the direction with a sonotrode spatial frequency different from the fabric spatial frequency;
- calculate a frequency distribution of the structural data;
- use a value of the frequency distribution to determine a quality characteristic, wherein the value includes at least one value of the frequency distribution at the sonotrode spatial frequency and/or at the fabric spatial frequency; and
- assess the quality check as passed if the quality characteristic lies within a specified value range.

13. An ultrasonic welding system including:
- an ultrasonic welding apparatus for producing an ultrasonic welded connection between a fabric tab (102) and a product (106), wherein the fabric tab (102) includes a fabric with yarns, wherein the yarns have a fabric spatial frequency in a direction, wherein the product (106) includes a thermoplastic material at least in one region of overlap (104) with the fabric tab (102), said region of overlap being provided for the ultrasonic welded connection, wherein the ultrasonic welding apparatus includes a sonotrode arrangement, wherein the sonotrode arrangement includes weld contacts arranged in succession in the direction with a sonotrode spatial frequency different from the fabric spatial frequency; and
- the device for checking quality according to claim 12.

14. A method for producing an ultrasonic welded connection using an ultrasonic welding system, wherein the method comprises the steps of:
- producing an ultrasonic welded connection between a fabric tab (102) and a product (106), wherein the fabric tab (102) includes a fabric with yarns, wherein the yarns have a fabric spatial frequency in a direction, wherein the product (106) includes a thermoplastic material at least in one region of overlap (104) with the fabric tab (102), said region of overlap including the ultrasonic welded connection, wherein the ultrasonic welded connection includes weld points arranged in succession in the direction with a sonotrode spatial frequency different from the fabric spatial frequency;
- measuring structural data of the ultrasonic welded connection;
- calculating a frequency distribution of the structural data; and
- using a value of the frequency distribution to determine a quality characteristic, wherein the value includes at least one value of the frequency distribution in the case of the sonotrode spatial frequency and/or in the case of the fabric spatial frequency,
- in the event that the quality characteristic lies outside a specified value range, controlling the ultrasonic welding apparatus so that the quality characteristic of an ultrasonic welded connection produced in the future lies with greater likelihood within the specified value range.

15. A document, including a document body and a book element, wherein the document body includes a thermoplastic material at least in a region of overlap (104) with a fabric tab (102) of the book element, wherein the fabric tab (102) and the document body are connected to one another in the region of overlap (104) by an ultrasonic welded connection, wherein the fabric tab (102) includes a fabric with yarns, wherein the yarns have a fabric spatial frequency in a direction, wherein the ultrasonic welded connection includes weld points arranged in succession in the direction with a sonotrode spatial frequency, wherein the document additionally includes an integrated electronic circuit with a non-volatile document memory, wherein data generated from the ultrasonic welded connection are stored in the document memory, wherein the data generated from the ultrasonic welded connection include at least one of measured structural data of the ultrasonic welded connection, a frequency distribution calculated from the structural data and/or a quality characteristic determined from the frequency distribution.

## Revendications

1. Procédé de contrôle de la qualité pour un assemblage soudé par ultrasons entre un rabat de tissu (102) et un produit (106), dans lequel le rabat de tissu (102) présente un tissu avec des fils, dans lequel les fils présentent une fréquence spatiale de tissage dans une direction, dans lequel le produit (106) présente au moins un matériau thermoplastique dans une zone de superposition (104) avec le rabat de tissu (102) présentant l'assemblage soudé par ultrasons, dans lequel l'assemblage soudé par ultrasons présente des points de soudure disposés les uns derrière les autres dans la direction avec une fréquence spatiale de sonotrode différente de la fréquence spatiale de tissage, le procédé comprenant :
- la mesure de données de structure de l'assemblage soudé par ultrasons ;
- le calcul d'une distribution des fréquences des données de structure ; et
- l'utilisation d'une valeur de la distribution des fréquences pour la détermination d'un indice de qualité, où la valeur présente au moins une valeur de la distribution des fréquences pour la fréquence spatiale de sonotrode et/ou la fréquence spatiale de tissage,
dans lequel le contrôle de la qualité est réussi lorsque l'indice de qualité se situe dans une plage de valeurs prédéfinie.

2. Procédé selon la revendication 1, dans lequel la mesure des données de structure comprend un balayage de lignes dans la direction, dans lequel la zone de l'assemblage soudé par ultrasons détectée par le balayage des lignes s'étend sur un grand nombre de fils et un grand nombre de points de soudure.

3. Procédé selon l'une des revendications précédentes, dans lequel l'indice de qualité est proportionnel au rapport de la valeur de la distribution des fréquences pour la fréquence spatiale de sonotrode sur la valeur de la distribution des fréquences pour la fréquence spatiale de tissage, dans lequel la plage de valeurs prédéfinie est définie de telle manière que le contrôle de qualité est réussi lorsque le rapport est égal ou supérieur à 3, de préférence, égal ou supérieur à 5, de manière particulièrement préférée, égal ou supérieur à 10.

4. Procédé selon l'une des revendications précédentes, dans lequel la valeur employée pour la détermination de l'indice de qualité présente la somme d'un maximum local de la distribution des fréquences pour la fréquence spatiale de sonotrode ainsi que des valeurs voisines de la distribution des fréquences dans une plage de fréquences prédéfinie autour de la fréquence spatiale de sonotrode et/ou la somme d'un maximum local de la distribution des fréquences pour la fréquence spatiales de tissage ainsi que des valeurs voisines de la distribution de fréquences dans une plage de fréquences prédéfinie autour de la fréquence spatiale de tissage.

5. Procédé selon l'une des revendications précédentes, dans lequel la mesure des données de structure a lieu par une réflexion et/ou une diffusion d'ondes électromagnétiques, de préférence, par des ondes électromagnétiques dans le domaine visible.

6. Procédé selon l'une des revendications précédentes, dans lequel la mesure des données de structure a lieu par triangulation.

7. Procédé selon l'une des revendications 1 à 5, dans lequel la mesure des données de structure a lieu par la transmission d'ondes électromagnétiques, de préférence, par des ondes électromagnétiques dans les domaines de l'infrarouge, tétrahertz et/ou des rayons X.

8. Procédé selon l'une des revendications précédentes, le procédé comprenant en outre une détection d'une image grand écran avec une première résolution, dans lequel l'image grand écran comprend des données de structure provisoires d'au moins un assemblage soudé par ultrasons, le procédé comprenant en outre une reconnaissance d'une zone d'image de l'image grand écran préférée, dans lequel la zone d'image préférée comprend les données de structure provisoires de l'assemblage soudé par ultrasons, dans lequel la mesure des données de structure a lieu par la détection d'une image de détail avec une deuxième résolution dans une zone d'image préférée, dans lequel la deuxième résolution est supérieure à la première résolution.

9. Procédé selon l'une des revendications précédentes, dans lequel la mesure des données de structure a lieu dans deux dimensions, dans lequel le calcul de la distribution des fréquences a lieu dans les deux dimensions, dans lequel des valeurs de la distribution des fréquences dans les deux dimensions sont employées pour la détermination de l'indice de qualité.

10. Procédé selon l'une des revendications précédentes, dans lequel le produit (106) présente un circuit électronique intégré avec une mémoire non volatile, le procédé comprenant en outre une écriture d'au moins une partie des données de structure, d'au moins une partie de la distribution des fréquences et/ou de l'indice de qualité dans la mémoire.

11. Procédé selon l'une des revendications précédentes, dans lequel une information est codée dans la structure des points de soudure, le procédé présentant en outre un décodage de l'information à partir des données de structure, dans lequel le contrôle de la qualité est réussi lorsque l'information décodée correspond avec une information codée prédéterminée.

12. Dispositif permettant le contrôle de la qualité, le dispositif présentant une unité de mesure (200) ainsi qu'une unité de calcul, dans lequel l'unité de calcul est en relation de communication avec l'unité de mesure (200), dans lequel l'unité de calcul présente un processeur ainsi qu'une mémoire, dans lequel des ordres programmés sont stockés dans la mémoire, dans lequel les ordres programmés font en sorte que lors de l'exécution par le processeur, l'unité de calcul réalise ce qui suit :
- la commande de l'unité de mesure (200) pour la mesure de données de structure d'un assemblage soudé par ultrasons entre un rabat de tissu (102) et un produit (106), dans lequel les données de structure comprennent une fréquence spatiale de tissage, dans lequel la fréquence spatiale de tissage décrit des fils d'un tissu du rabat de tissu (102) dans une direction, dans lequel les données de structure décrivent les points de soudure de l'assemblage soudé par ultrasons disposés les uns derrière les autres dans la direction avec une fréquence spatiale de sonotrode différente de la fréquence spatiale de tissage,
- le calcul d'une distribution des fréquences des données de structure ;
- l'utilisation d'une valeur de la distribution des fréquences pour la détermination d'un indice de qualité, où la valeur présente au moins une valeur de la distribution des fréquences pour la fréquence spatiale de sonotrode et/ou la fréquence spatiale de tissage ; et
- l'appréciation du contrôle de la qualité réussi lorsque l'indice de qualité se situe dans une plage de valeurs prédéfinie.

13. Système de soudage par ultrasons présentant :
- un appareil de soudage par ultrasons permettant l'élaboration d'un assemblage soudé par ultrasons entre un rabat de tissu (102) et un produit (106), dans lequel le rabat de tissu (102) présente un tissu avec des fils, dans lequel les fils présente une fréquence spatiale de tissage dans une direction, dans lequel le produit (106) présente au moins un matériau thermoplastique dans une zone de superposition (104) avec le rabat de tissu (102) prévue pour l'assemblage soudé par ultrasons, dans lequel l'appareil de soudage par ultrasons présente un ensemble de sonotrodes, dans lequel l'ensemble de sonotrodes présente des contacts de soudure disposés les uns derrière les autres dans la direction avec une fréquence spatiale de sonotrode différente de la fréquence spatiale de tissage ; et
- le dispositif de contrôle de la qualité selon la revendication 12.

14. Procédé de fabrication d'un assemblage soudé par ultrasons avec un système de soudage par ultrasons, le procédé comprenant :
- la fabrication d'un assemblage soudé par ultrasons entre un rabat de tissu (102) et un produit (106), dans lequel le rabat de tissu (102) présente un tissu avec des fils, dans lequel les fils présentent une fréquence spatiale de tissage dans une direction, dans lequel le produit (106) présente au moins un matériau thermoplastique dans une zone de superposition (104) avec le rabat de tissu (102) présentant l'assemblage soudé par ultrasons, dans lequel l'assemblage soudé par ultrasons présente des points de soudure disposés les uns derrière les autres dans la direction avec une fréquence spatiale de sonotrode différente de la fréquence spatiale de tissage ;
- la mesure de données de structure de l'assemblage soudé par ultrasons ;
- le calcul d'une distribution des fréquences des données de structure ; et
- l'utilisation d'une valeur de la distribution des fréquences pour la détermination d'un indice de qualité, où la valeur présente au moins une valeur de la distribution des fréquences pour la fréquence spatiale de sonotrode et/ou la fréquence spatiale de tissage,
- dans le cas où l'indice de qualité se situe en dehors d'une plage de valeurs prédéfinie, la commande de l'appareil de soudage par ultrasons de sorte que l'indice de qualité d'un assemblage soudé par ultrasons fabriqué à l'avenir se situe dans la plage de valeurs prédéfinie avec une probabilité plus élevée.

15. Document présentant un corps de document et un élément livret, dans lequel le corps de document présente un matériau thermoplastique au moins dans une zone de superposition (104) avec un rabat de tissu (102) de l'élément livret, dans lequel le rabat de tissu (102) et le corps de document sont reliés l'un à l'autre dans la zone de superposition (104) par une liaison par un soudage aux ultrasons, dans lequel le rabat de tissu (102) présente un tissu avec des fils, dans lequel les fils présentent une fréquence spatiale de tissage dans une direction, dans lequel l'assemblage soudé par ultrasons présente des points de soudure disposés les uns derrière les autres dans la direction avec une fréquence spatiale de sonotrode différente de la fréquence spatiale de tissage, le document présentant en outre un circuit électronique intégré avec une mémoire non volatile, dans lequel des données générées à partir de l'assemblage soudé par ultrasons sont stockées dans la mémoire de document, dans lequel les données générées à partir de l'assemblage soudé par ultrasons présentent au moins une donnée parmi des données de structure de l'assemblage soudé par ultrasons mesurées, une distribution de fréquences calculée à partir des données de structure, et/ou un indice de qualité déterminé à partir de la distribution des fréquences.
